# EUROPEAN PATENT APPLICATION

(11) **EP 4 131 114 A1**
(43) Date of publication of application: **08.02.2023**
(21) Application number: 22198071.7
(22) Date of filing: 04.05.2017
(51) Int. Cl.: G06Q 20/40, G06Q 20/10, G06Q 20/36, G06Q 20/32

(54) **USER INTERFACES FOR TRANSACTIONS**

(30) Priority: 12.06.2016 US 201662349010 P; 16.08.2016 DK PA201670622; 15.02.2017 US 201715433320
(62) Divisional of application: 17813737.8
(71) Applicant: Apple Inc., Cupertino, CA 95014 (US)
(72) Inventor: VAN OS, Marcel, Cupertino, 95014 (US); ALABI, Oluwatomiwa B., Cupertino, 95014 (US); ANTON, Peter D., Cupertino, 95014 (US); DICKER, George R., Cupertino, 95014 (US); TICKNER, Simon, Cupertino, 95014 (US); CANTELMO, Leonardo N., Cupertino, 95014 (US); GRAINGER, Morgan, Cupertino, 95014 (US); LYNCH, Kevin, Cupertino, 95014 (US); SHEARER, Nicholas John, Cupertino, 95014 (US)
(74) Representative: Zacco Denmark A/S

(57) **Abstract**

The present disclosure generally relates to transaction user interfaces. In some examples, a user is notified if there is an error with transaction parameters and the device determines whether potentially compatible transaction parameters are available on the electronic device. In some examples, the user is notified if there is an error with transaction parameters and the user is prompted to use another device to enter new transaction information.

## Description

### FIELD

The present disclosure relates generally to computer user interfaces, and more specifically to techniques for managing transactions.

### BACKGROUND

The use of electronic devices for participating in transactions has increased significantly in recent years. Exemplary techniques for participating in transactions include making an online purchase of a good or service on a website. Participating in transactions using such traditional techniques often requires the user to manually enter information, such as account information and personal information, using insecure and slow methods.

### BRIEF SUMMARY

Some techniques for managing transactions using electronic devices, however, are generally cumbersome and inefficient. For example, some existing techniques use a complex and time-consuming user interface, which may include multiple key presses or keystrokes, even at a reduced-size electronic device, such as a smartwatch. Existing techniques require more time than necessary, wasting user time and device energy. This latter consideration is particularly important in battery-operated devices. For another example, some existing techniques require the user to manually enter extensive information at the device to be used for the transaction, such as on a smartwatch. This can be inefficient when other devices with enhanced input mechanism, such as a smart phone or laptop, are available.

Accordingly, the present techniques provide electronic devices with faster, more efficient, and more secure methods and interfaces for managing transactions. Such methods and interfaces optionally complement or replace other methods for managing transactions. Such methods and interfaces reduce the cognitive burden on a user and produce a more efficient human-machine interface. For battery-operated computing devices, such methods and interfaces conserve power and increase the time between battery charges. Further, such methods and interfaces reduce the amount of input required at electronic devices, such as smartwatches.

In accordance with some embodiments, a method performed at an electronic device with a display, one or more input devices, and a hardware button is described. The method comprises: displaying, on the display, an application user interface for a respective application, wherein the application user interface includes a transaction affordance for requesting payment for activity associated with the respective application; while displaying the application user interface, detecting, via the one or more input devices, selection of the transaction affordance; and in response to detecting selection of the transaction affordance, displaying a transaction user interface that includes concurrently displaying: transaction details for the activity associated with the respective application; and instructions to activate the hardware button of the device to authorize payment for the activity associated with the respective application.

In accordance with some embodiments, a non-transitory computer-readable storage medium is described. The non-transitory computer-readable storage medium stores one or more programs configured to be executed by one or more processors of an electronic device with a display, one or more input devices, and a hardware button. The one or more programs including instructions for: displaying, on the display, an application user interface for a respective application, wherein the application user interface includes a transaction affordance for requesting payment for activity associated with the respective application; while displaying the application user interface, detecting, via the one or more input devices, selection of the transaction affordance; and in response to detecting selection of the transaction affordance, displaying a transaction user interface that includes concurrently displaying: transaction details for the activity associated with the respective application; and instructions to activate the hardware button of the device to authorize payment for the activity associated with the respective application.

In accordance with some embodiments, a transitory computer-readable storage medium is described. The transitory computer-readable storage medium stores one or more programs configured to be executed by one or more processors of an electronic device with a display, one or more input devices, and a hardware button. The one or more programs including instructions for: displaying, on the display, an application user interface for a respective application, wherein the application user interface includes a transaction affordance for requesting payment for activity associated with the respective application; while displaying the application user interface, detecting, via the one or more input devices, selection of the transaction affordance; and in response to detecting selection of the transaction affordance, displaying a transaction user interface that includes concurrently displaying: transaction details for the activity associated with the respective application; and instructions to activate the hardware button of the device to authorize payment for the activity associated with the respective application.

In accordance with some embodiments, an electronic device is described. The electronic device comprises: a display; one or more input devices; a hardware button; one or more processors; and a memory storing one or more programs configured to be executed by the one or more processors, the one or more programs including instructions for: displaying, on the display, an application user interface for a respective application, wherein the application user interface includes a transaction affordance for requesting payment for activity associated with the respective application; while displaying the application user interface, detecting, via the one or more input devices, selection of the transaction affordance; and in response to detecting selection of the transaction affordance, displaying a transaction user interface that includes concurrently displaying: transaction details for the activity associated with the respective application; and instructions to activate the hardware button of the device to authorize payment for the activity associated with the respective application.

In accordance with some embodiments, an electronic device is described. The electronic device comprising: a display; one or more input devices; a hardware button; means for displaying, on the display, an application user interface for a respective application, wherein the application user interface includes a transaction affordance for requesting payment for activity associated with the respective application; means, while displaying the application user interface, for detecting, via the one or more input devices, selection of the transaction affordance; and means, responsive to detecting selection of the transaction affordance, for displaying a transaction user interface that includes concurrently displaying: transaction details for the activity associated with the respective application; and instructions to activate the hardware button of the device to authorize payment for the activity associated with the respective application.

In accordance with some embodiments, a method performed at an electronic device with a display and one or more input devices is described. The method comprises: receiving a request to proceed with a transaction using transaction parameters; in response to the request to proceed with the transaction, in accordance with a determination that there is an error with the transaction parameters, displaying an error notification indicating that an error has been detected; receiving, via the one or more input devices, a request to correct the error; and in response to receiving the request to correct the error: in accordance with a determination that potentially compatible transaction parameters are available on the electronic device, displaying, on the display, one or more of the potentially compatible transaction parameters; and in accordance with a determination that potentially compatible transaction parameters are not available on the device, displaying, on the display, instructions to enter additional transaction parameters on a companion device that is different from the electronic device.

In accordance with some embodiments, a non-transitory computer-readable storage medium is described. The non-transitory computer-readable storage medium stores one or more programs configured to be executed by one or more processors of an electronic device with a display and one or more input devices, the one or more programs including instructions for: receiving a request to proceed with a transaction using transaction parameters; in response to the request to proceed with the transaction, in accordance with a determination that there is an error with the transaction parameters, displaying an error notification indicating that an error has been detected; receiving, via the one or more input devices, a request to correct the error; and in response to receiving the request to correct the error: in accordance with a determination that potentially compatible transaction parameters are available on the electronic device, displaying, on the display, one or more of the potentially compatible transaction parameters; and in accordance with a determination that potentially compatible transaction parameters are not available on the device, displaying, on the display, instructions to enter additional transaction parameters on a companion device that is different from the electronic device.

In accordance with some embodiments, a transitory computer-readable storage medium is described. The transitory computer-readable storage medium stores one or more programs configured to be executed by one or more processors of an electronic device with a display and one or more input devices, the one or more programs including instructions for: receiving a request to proceed with a transaction using transaction parameters; in response to the request to proceed with the transaction, in accordance with a determination that there is an error with the transaction parameters, displaying an error notification indicating that an error has been detected; receiving, via the one or more input devices, a request to correct the error; and in response to receiving the request to correct the error: in accordance with a determination that potentially compatible transaction parameters are available on the electronic device, displaying, on the display, one or more of the potentially compatible transaction parameters; and in accordance with a determination that potentially compatible transaction parameters are not available on the device, displaying, on the display, instructions to enter additional transaction parameters on a companion device that is different from the electronic device.

In accordance with some embodiments, an electronic device is described. The electronic device comprises: a display; one or more input devices; one or more processors; and a memory storing one or more programs configured to be executed by the one or more processors, the one or more programs including instructions for: receiving a request to proceed with a transaction using transaction parameters; in response to the request to proceed with the transaction, in accordance with a determination that there is an error with the transaction parameters, displaying an error notification indicating that an error has been detected; receiving, via the one or more input devices, a request to correct the error; and in response to receiving the request to correct the error: in accordance with a determination that potentially compatible transaction parameters are available on the electronic device, displaying, on the display, one or more of the potentially compatible transaction parameters; and in accordance with a determination that potentially compatible transaction parameters are not available on the device, displaying, on the display, instructions to enter additional transaction parameters on a companion device that is different from the electronic device.

In accordance with some embodiments, an electronic device is described. The electronic device comprises: a display; one or more input devices; means for receiving a request to proceed with a transaction using transaction parameters; means, responsive to the request to proceed with the transaction, in accordance with a determination that there is an error with the transaction parameters, for displaying an error notification indicating that an error has been detected; means for receiving, via the one or more input devices, a request to correct the error; and means, responsive to receiving the request to correct the error, for: in accordance with a determination that potentially compatible transaction parameters are available on the electronic device, displaying, on the display, one or more of the potentially compatible transaction parameters; and in accordance with a determination that potentially compatible transaction parameters are not available on the device, displaying, on the display, instructions to enter additional transaction parameters on a companion device that is different from the electronic device.

In accordance with some embodiments, an electronic device is described. The electronic device comprises: a display unit; one or more input device units; a hardware button unit; and a processing unit coupled to the display unit, the one or more input device units, and the hardware button unit, the processing unit configured to: enable display, on the display unit, of an application user interface for a respective application, wherein the application user interface includes a transaction affordance for requesting payment for activity associated with the respective application; while enabling display of the application user interface, detect, via the one or more input device units, selection of the transaction affordance; and in response to detecting selection of the transaction affordance, enable display, on the display unit, of a transaction user interface that includes concurrently displaying: transaction details for the activity associated with the respective application; and instructions to activate the hardware button unit of the electronic device to authorize payment for the activity associated with the respective application.

In accordance with some embodiments, an electronic device is described. The electronic device comprises: a display unit; one or more input device units; and a processing unit coupled to the display unit and the one or more input device units, the processing unit configured to: receive a request to proceed with a transaction using transaction parameters; in response to the request to proceed with the transaction, in accordance with a determination that there is an error with the transaction parameters, enable display, on the display unit, of an error notification indicating that an error has been detected; receive, via the one or more input device units, a request to correct the error; and in response to receiving the request to correct the error: in accordance with a determination that potentially compatible transaction parameters are available on the electronic device, enable display, on the display unit, of one or more of the potentially compatible transaction parameters; and in accordance with a determination that potentially compatible transaction parameters are not available on the electronic device, enable display, on the display unit, of instructions to enter additional transaction parameters on a companion device that is different from the electronic device.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing transactions, thereby increasing the effectiveness, efficiency, and user satisfaction with such devices. Such methods and interfaces may complement or replace other methods for managing transactions.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3 is a block diagram of an exemplary multifunction device with a display and a touch-sensitive surface in accordance with some embodiments.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 5C-5D illustrate exemplary components of a personal electronic device having a touch-sensitive display and intensity sensors in accordance with some embodiments.
FIGS. 5E-5H illustrate exemplary components and user interfaces of a personal electronic device in accordance with some embodiments.
FIG. 6 illustrates exemplary devices connected via one or more communication channels to complete participate in a transaction in accordance with some embodiments.
FIGS. 7A-7O illustrate exemplary user interfaces for managing transactions, in accordance with some embodiments.
FIG. 8 is a flow diagram illustrating a method for managing transactions, in accordance with some embodiments.
FIGS. 9A-9N illustrate exemplary user interfaces for managing transactions, in accordance with some embodiments.
FIG. 10 is a flow diagram illustrating a method for managing transactions, in accordance with some embodiments.
FIGS. 11-12 are functional block diagrams, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing transactions. In accordance with some embodiments, the user is notified if there is an error with transaction parameters and the device determines whether potentially compatible transaction parameters are available on the electronic device. In accordance with some embodiments, the user is notified if there is an error with transaction parameters and the user is prompted to use another device to enter new transaction information. Such techniques can reduce the cognitive burden on a user participates in transactions, thereby enhancing productivity. Further, such techniques can reduce processor and battery power otherwise wasted on redundant user inputs.

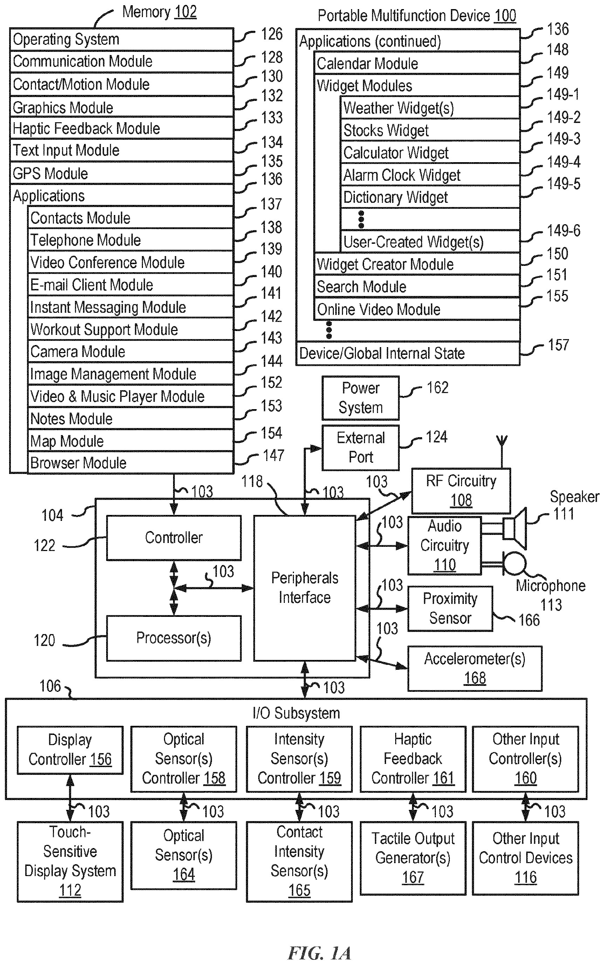

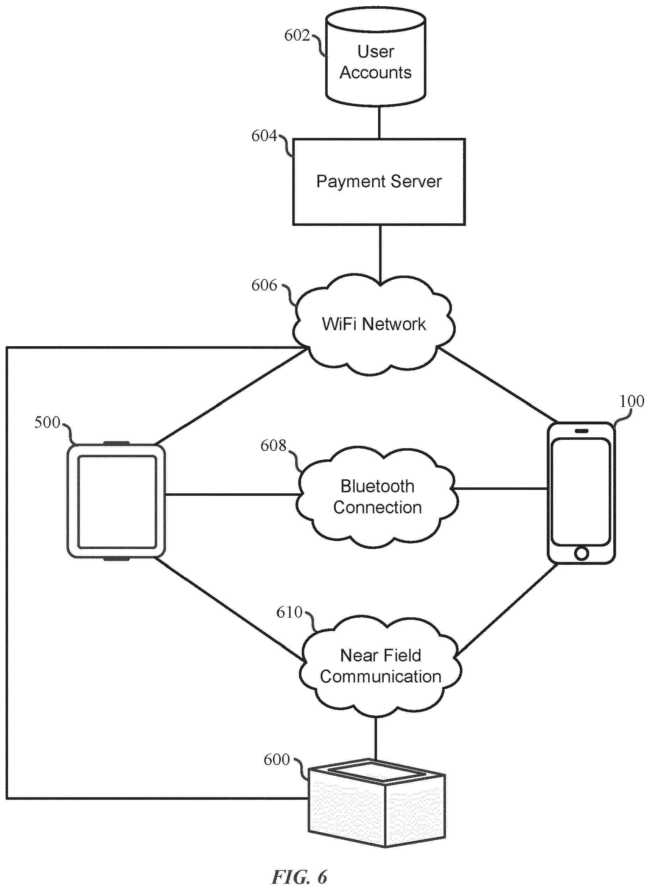

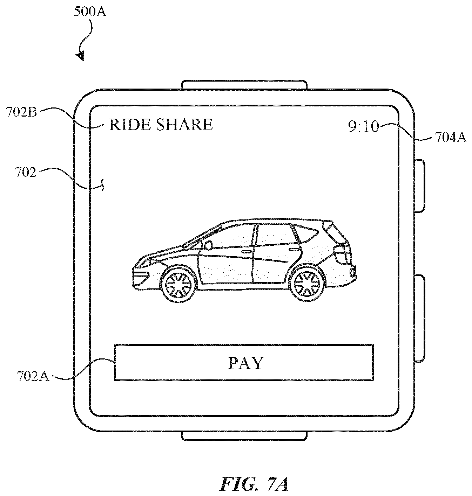

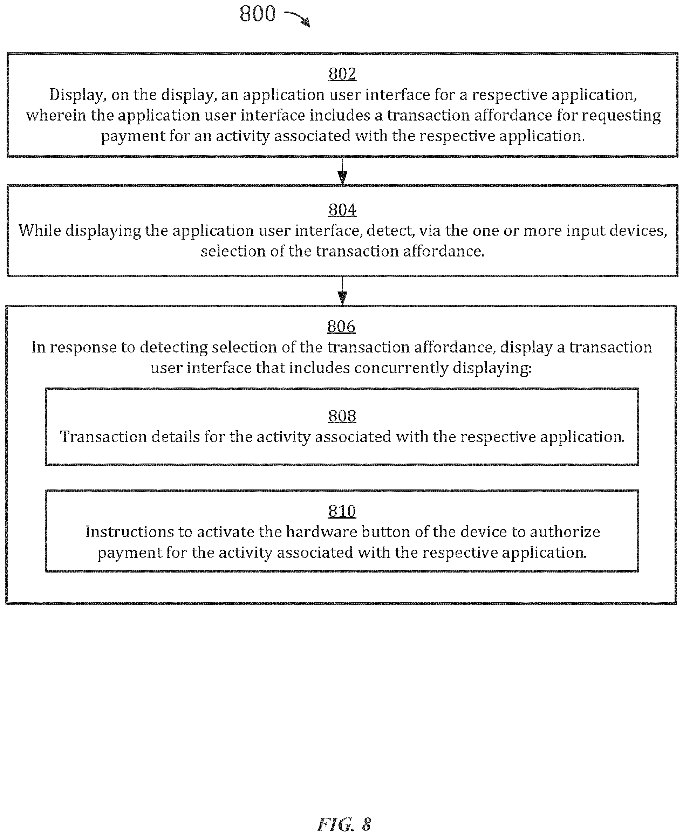

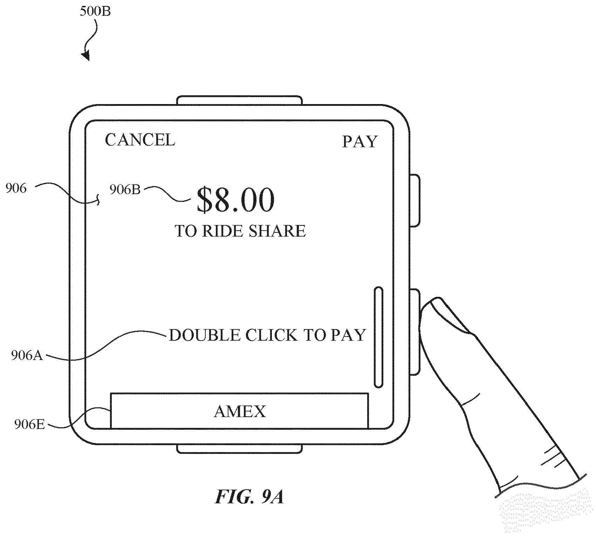

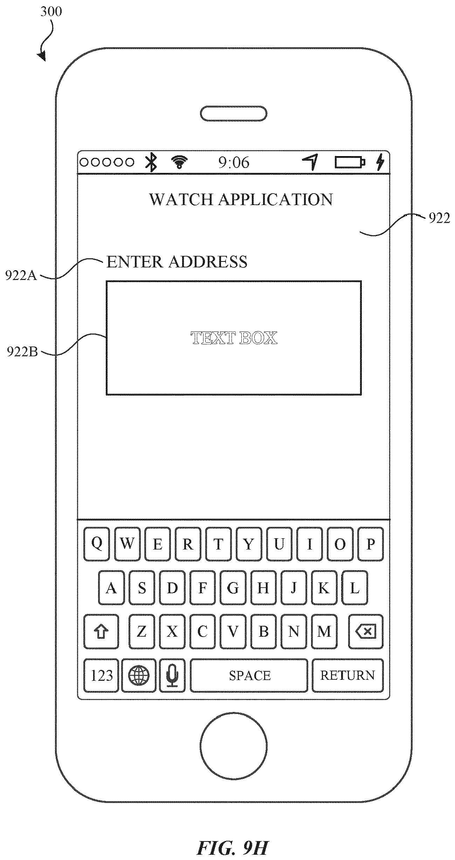

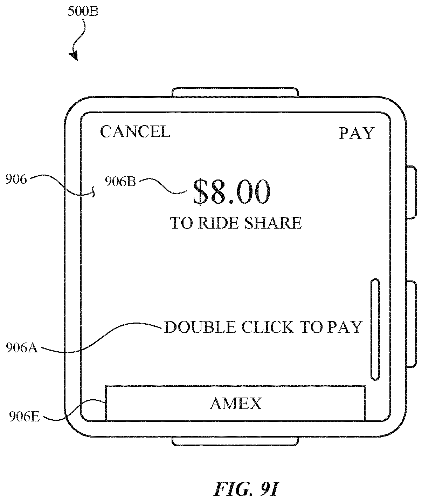

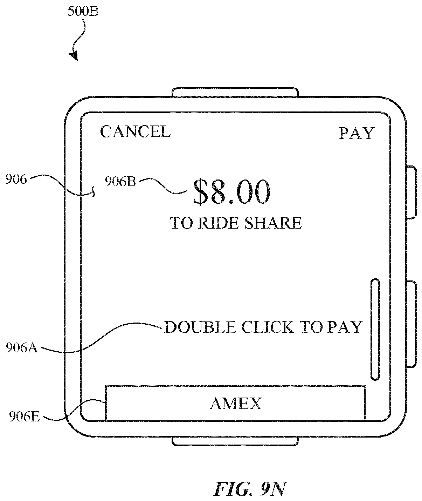

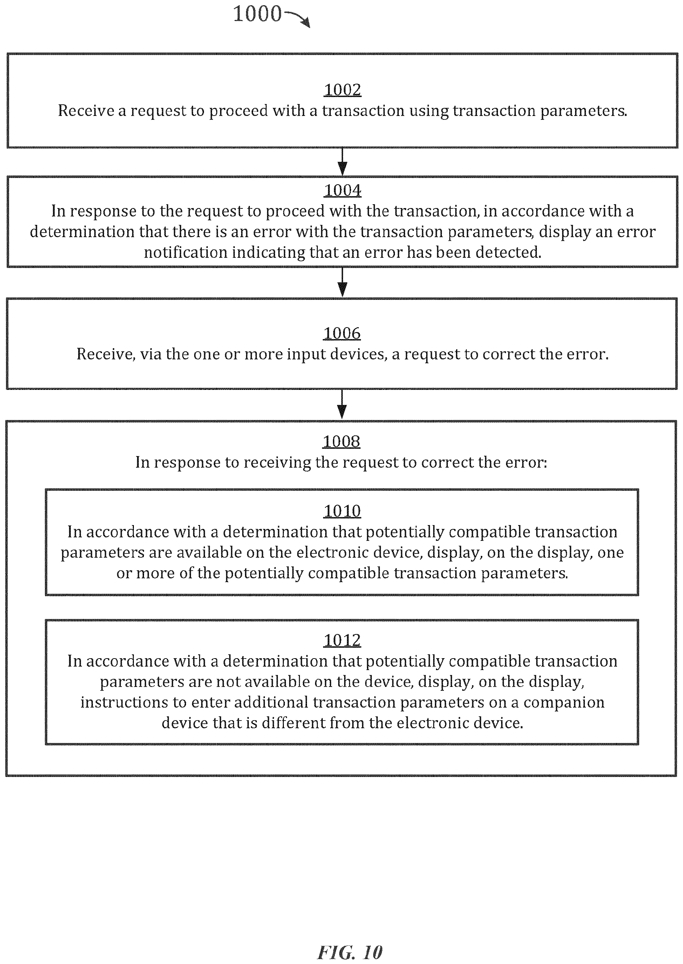

Below, FIGS. 1A-1B, 2, 3, 4A-4B, and 5A-5H provide a description of exemplary devices for performing the techniques for managing event notifications. FIG. 6 illustrates exemplary devices connected via one or more communication channels to complete participate in a transaction in accordance with some embodiments. FIGS. 7A-7O illustrate exemplary user interfaces for managing transactions. FIG. 8 is a flow diagram illustrating methods of managing transactions in accordance with some embodiments. The user interfaces in FIGS. 7A-7O are used to illustrate the processes described below, including the processes in FIG. 8. FIGS. 9A-9N illustrate exemplary user interfaces for managing transactions. FIG. 10 is a flow diagram illustrating methods of managing transactions in accordance with some embodiments. The user interfaces in FIGS. 9A-9N are used to illustrate the processes described below, including the processes in FIG. 10.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.1 In, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

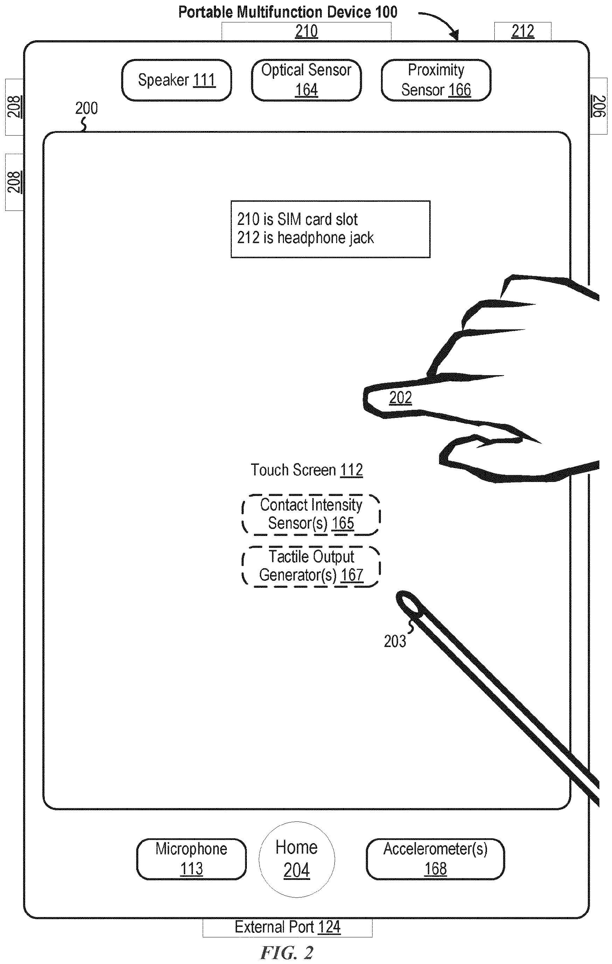

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some alternate embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "MultiFunctional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

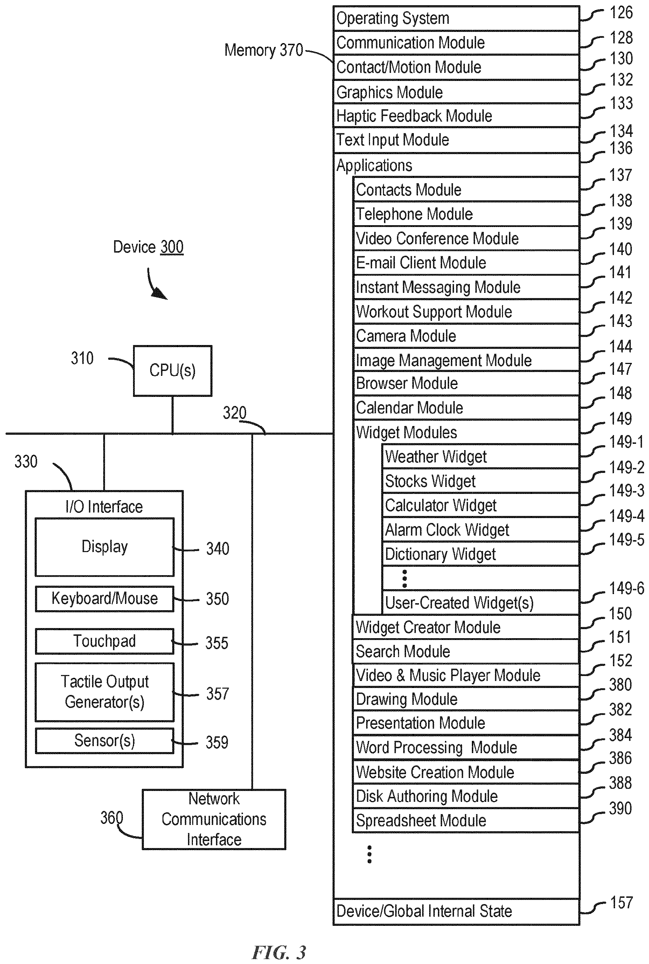

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3) stores device/global internal state 157, as shown in FIGS. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

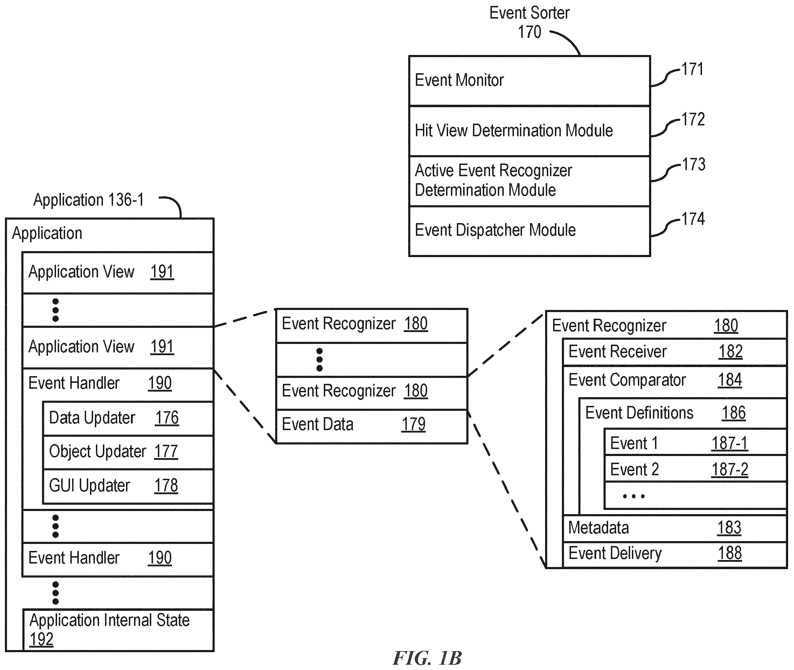

FIG. 1B is a block diagram illustrating exemplary components for event handling in accordance with some embodiments. In some embodiments, memory 102 (FIG. 1A) or 370 (FIG. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3 is, optionally, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Attention is now directed towards embodiments of user interfaces that are, optionally, implemented on, for example, portable multifunction device 100.

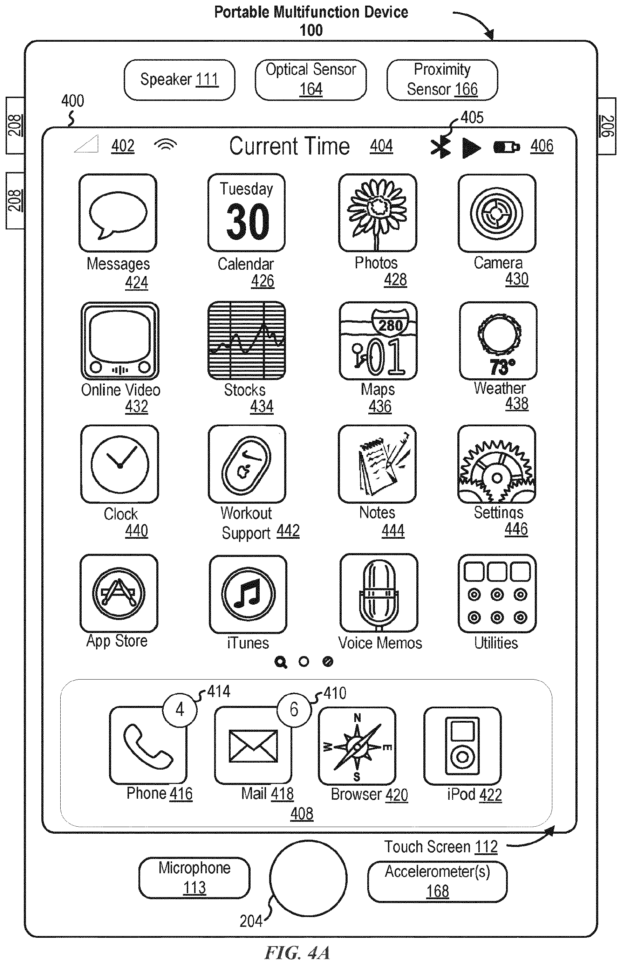

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

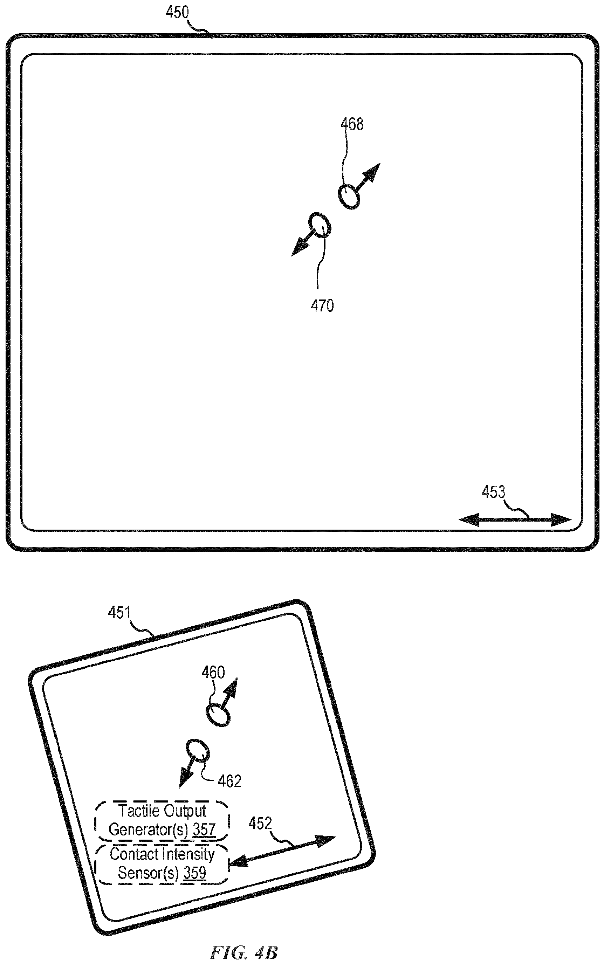

FIG. 4B illustrates an exemplary user interface on a device (e.g., device 300, FIG. 3) with a touch-sensitive surface 451 (e.g., a tablet or touchpad 355, FIG. 3) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

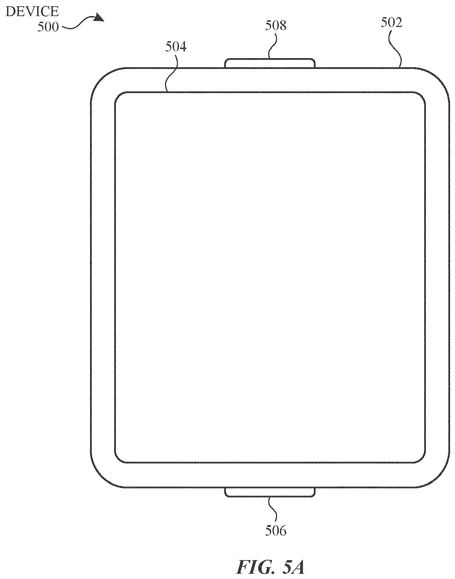

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

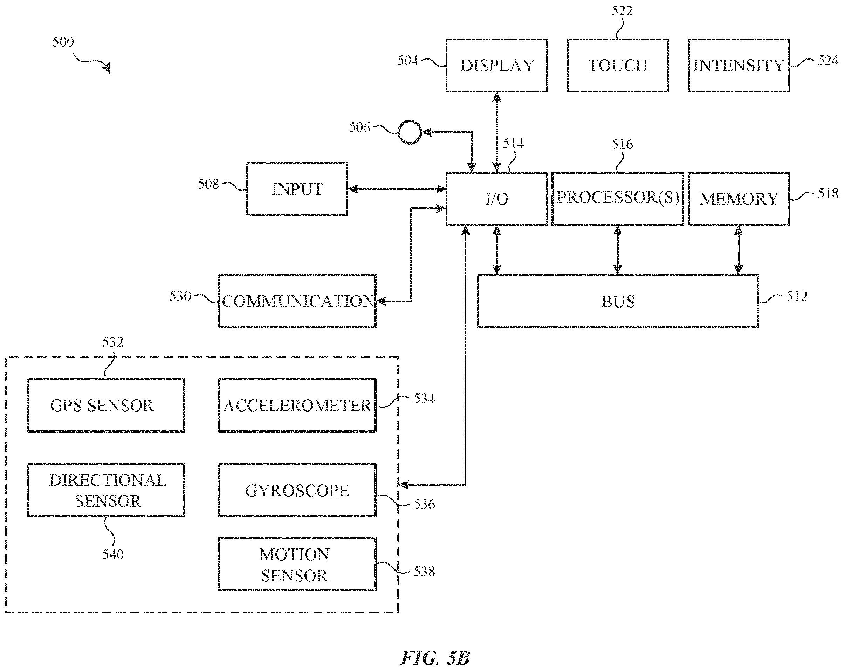

FIG. 5B depicts exemplary personal electronic device 500. In some embodiments, device 500 can include some or all of the components described with respect to FIGS. 1A, 1B, and 3. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 800 and 1000 (FIGS. 8 and 10). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3 or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

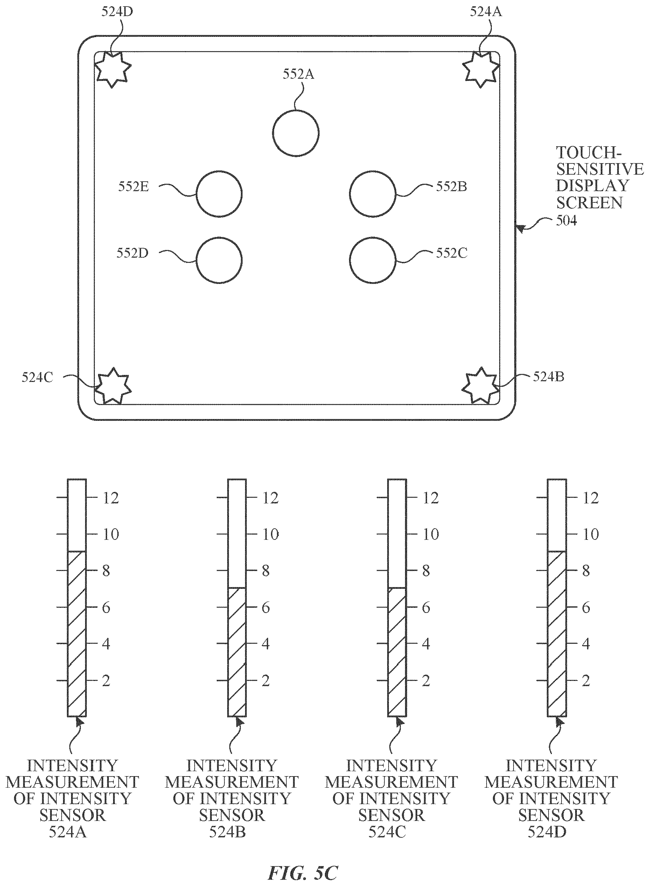

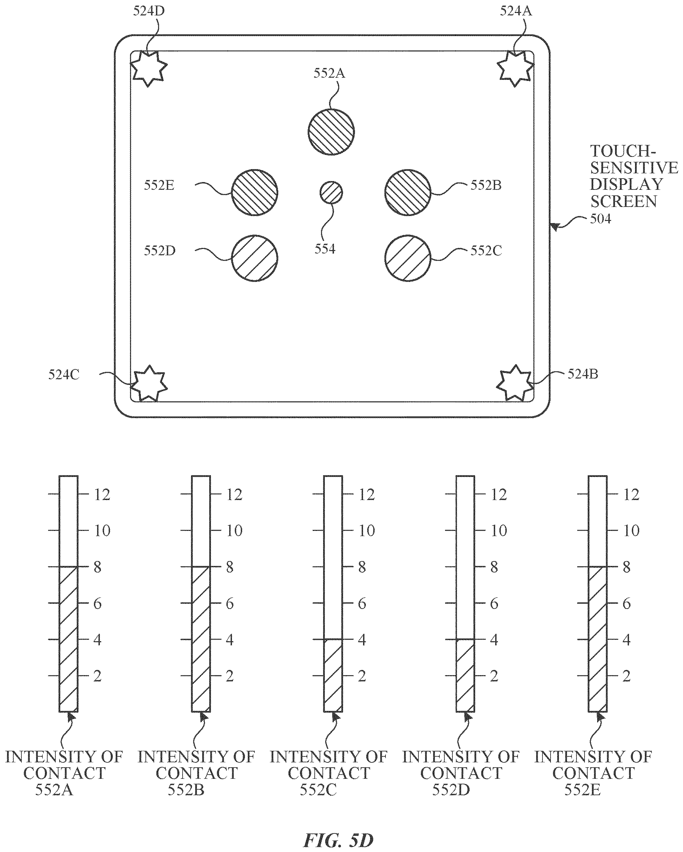

FIG. 5C illustrates detecting a plurality of contacts 552A-552E on touch-sensitive display screen 504 with a plurality of intensity sensors 524A-524D. FIG. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. FIG. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to FIGS. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in FIGS. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

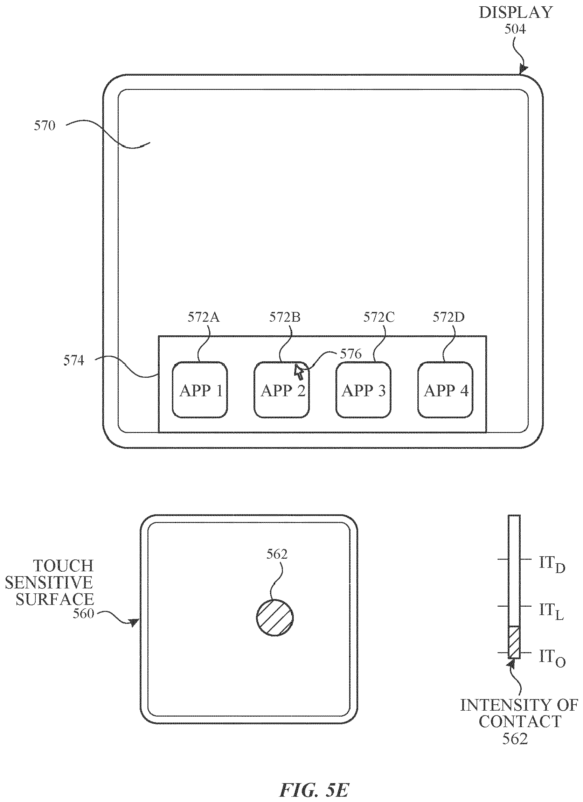

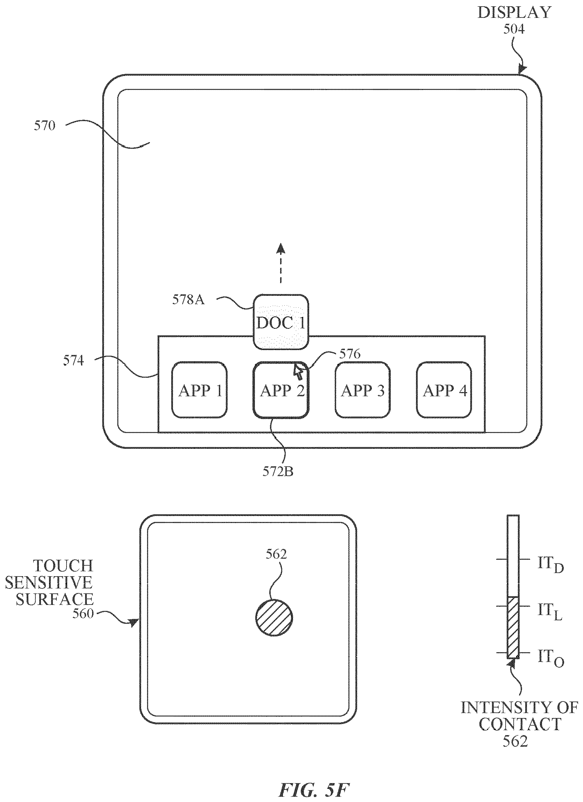

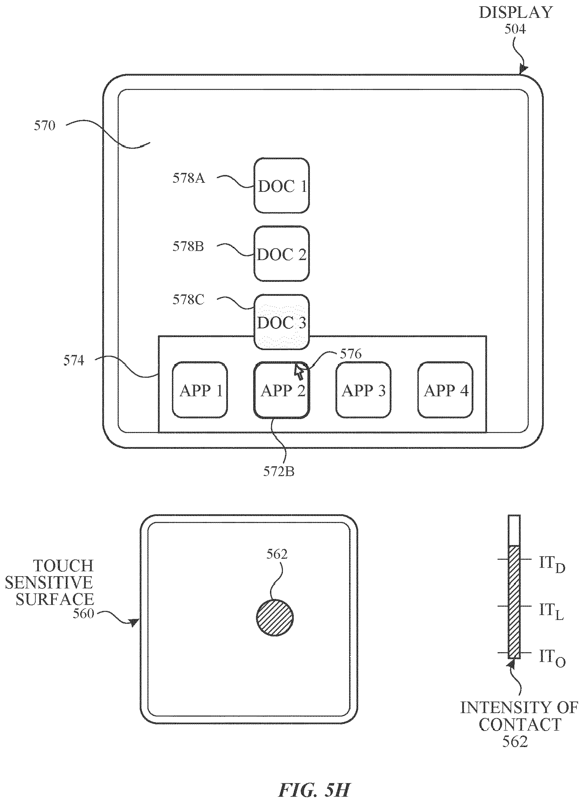

FIGS. 5E-5H illustrate detection of a gesture that includes a press input that corresponds to an increase in intensity of a contact 562 from an intensity below a light press intensity threshold (e.g., "IT_{L}") in FIG. 5E, to an intensity above a deep press intensity threshold (e.g., "IT_{D}") in FIG. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "IT_{D}"). Contact 562 is maintained on touch-sensitive surface 560. In response to the detection of the gesture, and in accordance with contact 562 having an intensity that goes above the deep press intensity threshold (e.g., "IT_{D}") during the gesture, reduced-scale representations 578A-578C (e.g., thumbnails) of recently opened documents for App 2 are displayed, as shown in FIGS. 5F-5H. In some embodiments, the intensity, which is compared to the one or more intensity thresholds, is the characteristic intensity of a contact. It should be noted that the intensity diagram for contact 562 is not part of a displayed user interface, but is included in FIGS. 5E-5H to aid the reader.

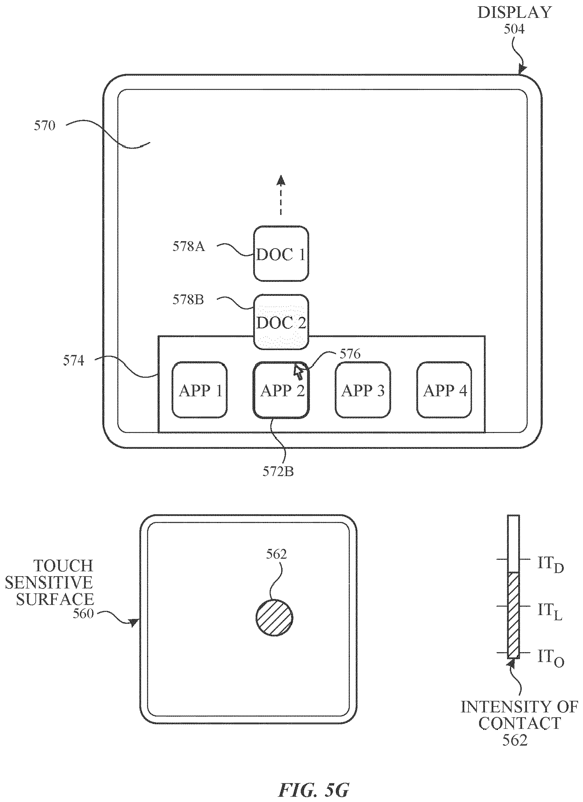

In some embodiments, the display of representations 578A-578C includes an animation. For example, representation 578A is initially displayed in proximity of application icon 572B, as shown in FIG. 5F. As the animation proceeds, representation 578A moves upward and representation 578B is displayed in proximity of application icon 572B, as shown in FIG. 5G. Then, representations 578A moves upward, 578B moves upward toward representation 578A, and representation 578C is displayed in proximity of application icon 572B, as shown in FIG. 5H. Representations 578A-578C form an array above icon 572B. In some embodiments, the animation progresses in accordance with an intensity of contact 562, as shown in FIGS. 5F-5G, where the representations 578A-578C appear and move upwards as the intensity of contact 562 increases toward the deep press intensity threshold (e.g., "IT_{D}"). In some embodiments, the intensity, on which the progress of the animation is based, is the characteristic intensity of the contact. The operations described with reference to FIGS. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

FIG. 6 illustrates exemplary devices connected via one or more communication channels to participate in a transaction in accordance with some embodiments. One or more exemplary electronic devices (e.g., devices 100, 300, and 500) are configured to optionally detect input (e.g., a particular user input, an NFC field) and optionally transmit payment information (e.g., using NFC). The one or more electronic devices optionally include NFC hardware and are configured to be NFC-enabled.

The electronic devices (e.g., devices 100, 300, and 500) are optionally configured to store payment account information associated with each of one or more payment accounts. Payment account information includes, for example, one or more of: a person's or company's name, a billing address, a login, a password, an account number, an expiration date, a security code, a telephone number, a bank associated with the payment account (e.g., an issuing bank), and a card network identifier. In some examples, payment account information includes include an image, such as a picture of a payment card (e.g., taken by the device and/or received at the device). In some examples, the electronic devices receive user input including at least some payment account information (e.g., receiving user-entered credit, debit, account, or gift card number and expiration date). In some examples, the electronic devices detect at least some payment account information from an image (e.g., of a payment card captured by a camera sensor of the device). In some examples, the electronic devices receive at least some payment account information from another device (e.g., another user device or a server). In some examples, the electronic device receives payment account information from a server associated with another service for which an account for a user or user device previously made a purchase or identified payment account data (e.g., an app for renting or selling audio and/or video files).

In some embodiments, a payment account is added to an electronic device (e.g., device 100, 300, and 500), such that payment account information is securely stored on the electronic device. In some examples, after a user initiates such process, the electronic device transmits information for the payment account to a transaction-coordination server, which then communicates with a server operated by a payment network for the account (e.g., a payment server) to ensure a validity of the information. The electronic device is optionally configured to receive a script from the server that allows the electronic device to program payment information for the account onto the secure element.

In some embodiments, communication among electronic devices 100, 300, and 500 facilitates transactions (e.g., generally or specific transactions). For example, a first electronic device (e.g., 100) can serve as a provisioning or managing device, and can send notifications of new or updated payment account data (e.g., information for a new account, updated information for an existing account, and/or an alert pertaining to an existing account) to a second electronic device (e.g., 500). In another example, a first electronic device (e.g., 100) can send data to a second election device, wherein the data reflects information about payment transactions facilitated at the first electronic device. The information optionally includes one or more of: a payment amount, an account used, a time of purchase, and whether a default account was changed. The second device (e.g., 500) optionally uses such information to update a default payment account (e.g., based on a learning algorithm or explicit user input).

Electronic devices (e.g., 100, 300, 500) are configured to communicate with each other over any of a variety of networks. For example, the devices communicate using a Bluetooth connection 608 (e.g., which includes a traditional Bluetooth connection or a Bluetooth Low Energy connection) or using a WiFi network 606. Communications among user devices are, optionally, conditioned to reduce the possibility of inappropriately sharing information across devices. For example, communications relating to payment information requires that the communicating devices be paired (e.g., be associated with each other via an explicit user interaction) or be associated with a same user account.

In some embodiments, an electronic device (e.g., 100, 300, 500) is used to communicate with a point-of-sale (POS) payment terminal 600, which is optionally NFC-enabled. The communication optionally occurs using a variety of communication channels and/or technologies. In some examples, electronic device (e.g., 100, 300, 500) communicates with payment terminal 600 using an NFC channel 610. In some examples, payment terminal 600 communicates with an electronic device (e.g., 100, 300, 500) using a peer-to-peer NFC mode. Electronic device (e.g., 100, 300, 500) is optionally configured transmit a signal to payment terminal 600 that includes payment information for a payment account (e.g., a default account or an account selected for the particular transaction).

In some embodiments, generation of and/or transmission of the signal is controlled by a secure element in the electronic device (e.g., 100, 300, 500). The secure element optionally requires a particular user input prior to releasing payment information. For example, the secure element optionally requires detection that the electronic device is being worn, detection of a button press, detection of entry of a passcode, detection of a touch, detection of one or more option selections (e.g., received while interacting with an application), detection of a fingerprint signature, detection of a voice or voice command, and or detection of a gesture or movement (e.g., rotation or acceleration). In some examples, if a communication channel (e.g., an NFC communication channel) with another device (e.g., payment terminal 600) is established within a defined time period from detection of the input, the secure element releases payment information to be transmitted to the other device (e.g., payment terminal 600). In some examples, the secure element is a hardware component that controls release of secure information. In some examples, the secure element is a software component that controls release of secure information.

In some embodiments, protocols related to transaction participation depend on, for example, device types. For example, a condition for generating and/or transmitting payment information can be different for a wearable device (e.g., device 500) and a phone (e.g., device 100). For example, a generation and/or transmission condition for a wearable device includes detecting that a button has been pressed (e.g., after a security verification), while a corresponding condition for a phone does not require button-depression and instead requires detection of particular interaction with an application. In some examples, a condition for transmitting and/or releasing payment information includes receiving particular input on each of multiple devices. For example, release of payment information optionally requires detection of a fingerprint and/or passcode at the device (e.g., device 100) and detection of a mechanical input (e.g., button press) on another device (e.g., device 500).

Payment terminal 600 optionally uses the payment information to generate a signal to transmit to a payment server 604 to determine whether the payment is authorized. Payment server 604 optionally includes any device or system configured to receive payment information associated with a payment account and to determine whether a proposed purchase is authorized. In some examples, payment server 604 includes a server of an issuing bank. Payment terminal 600 communicates with payment server 604 directly or indirectly via one or more other devices or systems (e.g., a server of an acquiring bank and/or a server of a card network).

Payment server 604 optionally uses at least some of the payment information to identify a user account from among a database of user accounts (e.g., 602). For example, each user account includes payment information. An account is, optionally, located by locating an account with particular payment information matching that from the POS communication. In some examples, a payment is denied when provided payment information is not consistent (e.g., an expiration date does not correspond to a credit, debit or gift card number) or when no account includes payment information matching that from the POS communication.

In some embodiments, data for the user account further identifies one or more restrictions (e.g., credit limits); current or previous balances; previous transaction dates, locations and/or amounts; account status (e.g., active or frozen), and/or authorization instructions. In some examples, the payment server (e.g., 604) uses such data to determine whether to authorize a payment. For example, a payment server denies a payment when a purchase amount added to a current balance would result in exceeding an account limit, when an account is frozen, when a previous transaction amount exceeds a threshold, or when a previous transaction count or frequency exceeds a threshold.

In some embodiments, payment server 604 responds to POS payment terminal 600 with an indication as to whether a proposed purchase is authorized or denied. In some examples, POS payment terminal 600 transmits a signal to the electronic device (e.g., 100, 300, 500) to identify the result. For example, POS payment terminal 600 sends a receipt to the electronic device (e.g., 100, 300, 500) when a purchase is authorized (e.g., via a transaction-coordination server that manages a transaction app on the user device). In some instances, POS payment terminal 600 presents an output (e.g., a visual or audio output) indicative of the result. Payment can be sent to a merchant as part of the authorization process or can be subsequently sent.

In some embodiments, the electronic device (e.g., 100, 300, 500) participates in a transaction that is completed without involvement of POS payment terminal 600. For example, upon detecting that a mechanical input has been received, a secure element in the electronic device (e.g., 100, 300, 500) releases payment information to allow an application on the electronic device to access the information (e.g., and to transmit the information to a server associated with the application).

In some embodiments, the electronic device (e.g., 100, 300, 500) is in a locked state or an unlocked state. In the locked state, the electronic device is powered on and operational but is prevented from performing a predefined set of operations in response to the user input. The predefined set of operations may include navigation between user interfaces, activation or deactivation of a predefined set of functions, and activation or deactivation of certain applications. The locked state may be used to prevent unintentional or unauthorized use of some functionality of the electronic device or activation or deactivation of some functions on the electronic device. In the unlocked state, the electronic device 100 is power on and operational and is not prevented from performing at least a portion of the predefined set of operations that cannot be performed while in the locked state.

When the device is in the locked state, the device is said to be locked. In some embodiments, the device in the locked state may respond to a limited set of user inputs, including input that corresponds to an attempt to transition the device to the unlocked state or input that corresponds to powering the device off.

In some examples, a secure element is a hardware component (e.g., a secure microcontroller chip) configured to securely store data or an algorithm. In some examples, the secure element provides (or releases) payment information (e.g., an account number and/or a transaction-specific dynamic security code). In some examples, the secure element provides (or releases) the payment information in response to the device receiving authorization, such as a user authentication (e.g., fingerprint authentication; passcode authentication; detecting double-press of a hardware button when the device is in an unlocked state, and optionally, while the device has been continuously on a user's wrist since the device was unlocked by providing authentication credentials to the device, where the continuous presence of the device on the user's wrist is determined by periodically checking that the device is in contact with the user's skin). For example, the device detects a fingerprint at a fingerprint sensor (e.g., a fingerprint sensor integrated into a button) of the device. The device determines whether the fingerprint is consistent with a registered fingerprint. In accordance with a determination that the fingerprint is consistent with the registered fingerprint, the secure element provides (or releases) payment information. In accordance with a determination that the fingerprint is not consistent with the registered fingerprint, the secure element forgoes providing (or releasing) payment information.

Attention is now directed towards embodiments of user interfaces ("UI") and associated processes that are implemented on an electronic device, such as portable multifunction device 100, device 300, or device 500.

FIGS. 7A-7O illustrate exemplary user interfaces for transactions, in accordance with some embodiments. The user interfaces in these figures are used to illustrate the processes described below, including the processes in FIG. 8.

In some embodiments, electronic device 500A includes a display, one or more input devices, and a hardware button (e.g., a mechanical button that is configured to enable a secure payment module to provide payment information for use in a payment transaction). In some embodiments, electronic device 500A is a smartwatch electronic device. In some embodiments, device 500A includes some or all of the features of device 100, device 300, or device 500.

As illustrated in FIG. 7A, the electronic device 500A displays, on the display, an application user interface 702 for a respective application (e.g., a third-party application), wherein the application user interface (e.g., 702) includes a transaction affordance (e.g., 702A) for requesting payment for activity associated with the respective application. In some examples, the electronic device displays a system user interface element (e.g., a time indicator 704A, a date indicator). In the example of FIG. 7A, the system user interface element 704A indicates the current time of day. In some examples, the system user interface element indicates a day of the month, a currently logged in user account name, a current location of the device, and/or an indication of the battery level for the electronic device 500A. In some examples, the electronic device 500A displays an indication 702B of the name of the respective application.

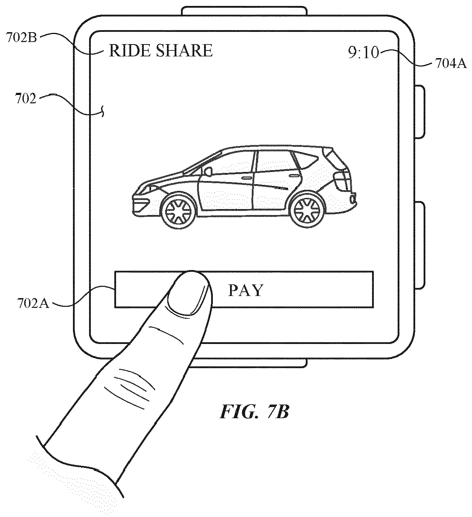

At FIG. 7B, while displaying the application user interface (e.g., 702), the electronic device 500A detects, via the one or more input devices, selection of the transaction affordance 702A. In some examples, detecting selection of the transaction affordance 702A includes detecting a tap input at a location on a touch-sensitive surface of the electronic device 500A that corresponds to the transaction affordance 702A.

In some embodiments, as illustrated in FIGS. 7A-7B, the transaction affordance (e.g., 702A) displayed in the application user interface (e.g., 702) for the respective application is provided (e.g., to the respective application for use in the application user interface) by a payment application of the electronic device (e.g., 500A) that is different from the respective application (e.g., the transaction affordance is a button with an appearance and/or location determined by the payment application, such as a payment button that says "pay with wallet"). In some examples, the payment application is a first-party application provided by the manufacturer of the electronic device. In some examples, the payment application is an electronic wallet application with access to information that is personal to a user of the electronic device and the respective application does not have access to the information. In some examples, the information is payment information (e.g., account number, payment account number) of a payment account (e.g., a credit account) of the electronic wallet application. In some examples, the electronic wallet application has access to information for a plurality of payment accounts associated with the user of the electronic device 500A.

In some embodiments, as illustrated in FIGS. 7A-7B, the transaction affordance (e.g., 702A) which, when activated, triggers display of the transaction user interface (e.g., 706) (e.g., by the payment application), is provided by the respective application (e.g., the transaction affordance is a button with an appearance and location determined by the respective application, such as a ride sharing payment button that says "request ride").

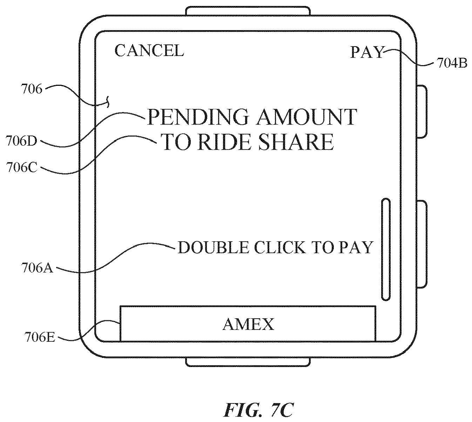

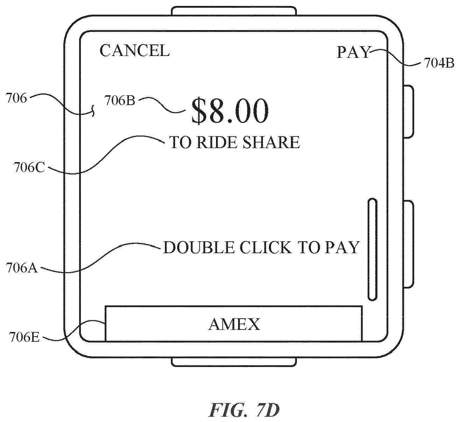

FIGS. 7C and 7D illustrate alternative user interfaces. As illustrated in FIGS. 7C and 7D, in response to detecting selection of the transaction affordance (e.g., 702A), the electronic device 500A displays a transaction user interface (e.g., 706) (e.g., replacing display of the application user interface 702 with display of the transaction user interface 706) that includes concurrently displaying transaction details (e.g., a payment amount 706B, a recipient of the payment 706C, a name of the respective application, an amount of tax, an indication 706D that the cost of the activity is variable) for the activity associated with the respective application and instructions (e.g., 706A) to activate the hardware button of the device 500A to authorize payment for the activity associated with the respective application.

In some embodiments, the respective application is a third-party application. In some examples, prior to displaying the application user interface 702 for the respective application, the electronic device receives a user-provided request to download and install the respective application. In some examples, prior to displaying the application user interface 702 for the respective application, the electronic device receives a user-provided request to download and install the respective application. In some examples, the electronic device is configured to allow the respective application to be uninstalled or deleted from the electronic device based on a user request.

In some embodiments, the activity associated with the respective application includes one or more of: a request for transportation, a request for ride sharing, purchasing a service, purchasing a product, and conducting a peer-to-peer transaction. In some examples, the activity associated with the respective application is a request for transportation. In some examples, the activity associated with the respective application is a request for ride sharing. In some examples, the activity associated with the respective application is purchasing a service. In some examples, the activity associated with the respective application is purchasing a product. In some examples, the activity associated with the respective application is conducting a peer-to-peer transaction.

In some embodiments, as illustrated in FIG. 7C, if the activity has a variable cost, the information about the cost of the activity indicates that the transaction has a variable cost (e.g., 706D, a "Pending" indication at the top of the user interface 706, with a total charged amount displayed at a bottom of the UI when the UI is scrolled). In some embodiments, in accordance with a determination that the activity has a variable cost, the transaction details include an indication (e.g., 706D) that the activity has a variable cost. For example, information 706D includes the language "pending amount" to indicate that the cost of the activity will be determined after the activity concludes (e.g., after the user completes a ride in using the rideshare system). In some examples, in response to receiving input (e.g., detecting a scroll gesture on the touch-sensitive surface, detecting rotation of a rotatable input mechanism) corresponding to an instruction to scroll the transaction user interface 706, the electronic device scrolls the transaction user interface 706 on the display to display a total cost for payment.

In some embodiments, as illustrated in FIG. 7D, the transaction details include information (e.g., 706B) about a cost of the activity. In some examples, the transaction details include a total cost for the activity. In some examples, the transaction details include a shipping cost for the activity (e.g., cost to ship a product).

In some embodiments, as illustrated in FIGS. 7C-7E, displaying the transaction user interface (e.g., 706) further includes (e.g., concurrently) displaying a graphical representation (e.g., 706E) of a payment account with which payment will be made (e.g., by the electronic device 500A) if authorization to proceed with the payment transaction is received (e.g., via a double press of the hardware button by the user). In some examples, the payment account is a default payment account. In some examples, the payment account is a payment account selected by the user for payment for the activity. In some examples, the graphical representation of the payment account includes a depiction of a physical payment card (e.g., depiction of an American Express card) associated with the payment account. In some examples, in response to receiving input (e.g., detecting a scroll gesture on the touch-sensitive surface, detecting rotation of a rotatable input mechanism) corresponding to an instruction to scroll the transaction user interface 706, the electronic device scrolls the transaction user interface 706 on the display to display the graphical representation of the payment account. In some examples, an electronic wallet application of the electronic device stores the payment account (and, optionally, one or more additional payment accounts). The payment account (and, optionally, the one or more additional payment accounts) is an account of the user of the electronic device.

In some embodiments, as illustrated in FIGS. 7C-7E, the instructions (e.g., 706A) to activate the hardware button are displayed at a location on the display. In some examples, as illustrated in FIGS. 7C-7E, the location on the display corresponds to (e.g., is adjacent to) the hardware button of the electronic device.

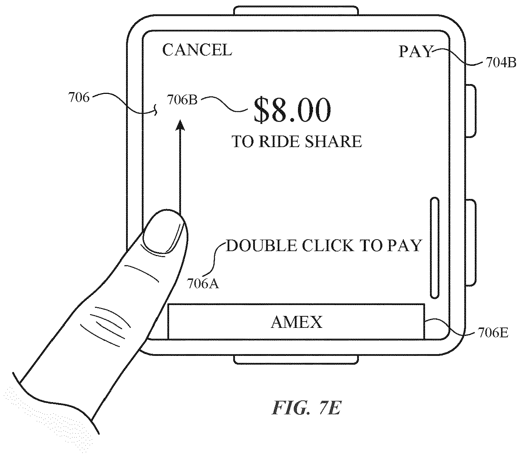

In some embodiments, as illustrated in FIGS. 7E-7F,while displaying the transaction user interface (e.g., 706) that includes the transaction details (e.g., 708A, 708B, contact information, shipping address, tax, total cost) and the instructions (e.g., 706A) to activate the hardware button, receiving input, via the one or more input devices (e.g., detecting a scroll gesture on the touch-sensitive surface, detecting rotation of a rotatable input mechanism), corresponding to an instruction (e.g., a user request to the electronic device 500A) to scroll the transaction user interface (e.g., 706). In some examples, in response to receiving the input corresponding to the instruction to scroll the transaction user interface (e.g., 706): the electronic device 500A displays (e.g., by scrolling the transaction user interface (e.g., 706) to reveal), on the display, additional transaction details (e.g., billing address 708A, contact information 708B, shipping address, tax, total cost) for the activity associated with the respective application.

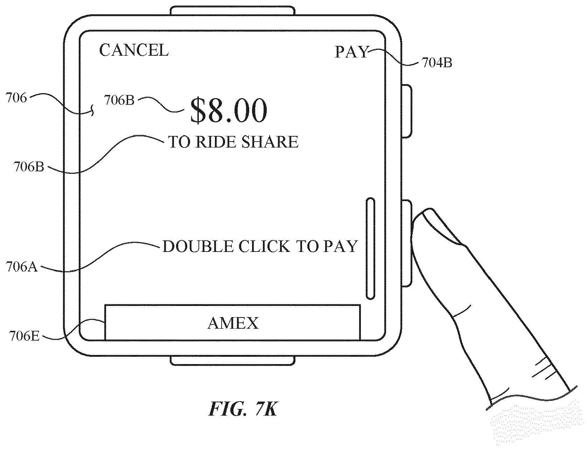

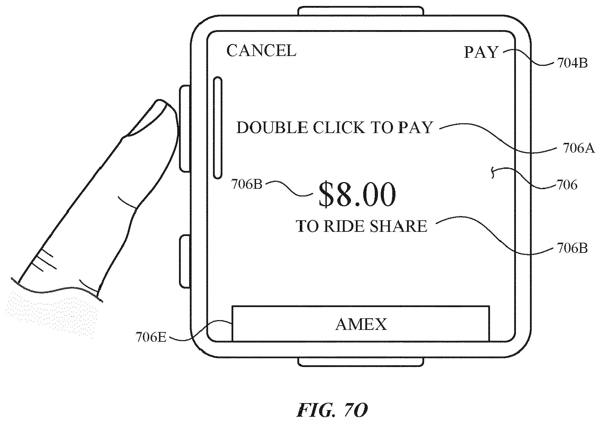

In some embodiments, the electronic device does not scroll the instructions (e.g., 706A) to activate the hardware button, even when the user performs the scroll gesture. In some examples, the instructions (e.g., 706A) to activate the hardware button are displayed at a location on the display that is determined based on a location of the hardware button. In some examples, the instructions (e.g., 706A) are displayed near the hardware button to inform the user that the button can be activated to authorize payment. In some embodiments, as illustrated in FIGS. 7C-7E and 7K, in accordance with a determination that the hardware button is in a first location (e.g., due to an orientation of the device), the electronic device 500A displays the instructions 706A at a first location on the display (e.g., above a representation of the payment amount 706B and adjacent to the hardware button on the device 500A). In some embodiments, as illustrated in FIG. 7O, in accordance with a determination that the hardware button is in a second location, the electronic device 500A displays the instructions 706A at a second location on the display that is different from the first location (e.g., below a representation of the payment amount 706B and adjacent to the button on the device 500A). In some examples, displaying additional transaction details for the activity associated with the respective application includes: foregoing scrolling the instructions to activate the hardware button (e.g., maintaining display of the instructions (e.g., 706A) to activate the hardware button, and scrolling the additional transaction details (e.g., 708A, 708B) onto the display (e.g., onto a location of the instructions to activate the hardware button). In some examples, the instructions to activate the hardware button remains displayed (at least initially) at the location on the display while the additional transaction details scrolls onto the display. In some examples, the instructions (e.g., 706) to activate the hardware button fades (without scrolling) out on the display while the additional transaction details scrolls onto the display. In some examples, electronic device 500A fades away the instructions (e.g., 706) to activate the hardware button as the electronic device scrolls the transaction user interface (e.g., 706) to reveal the additional transaction details. As a result, the electronic device does not vary the location of the instructions to activate the hardware button because the location of the instruction to activate the hardware button is tied to the location of the physical hardware button.

In some embodiments, the additional transaction details (e.g., 708A, 708B) scroll on top of the instructions (e.g., 706A). In some examples, the scrolling causes the additional transaction details (e.g., 708A, 708B) to at first partially cover the instructions (e.g., 706A) and subsequently to fully cover the instructions (e.g., 706A). In some embodiments, displaying additional transaction details for the activity associated with the respective application includes: scrolling the additional transaction details (e.g., 708A, 708B) onto the display such that the additional transaction details obscure (fully, partially, or replace) the instructions to activate the hardware button. As a result, the electronic device 500A does not vary the location of the instructions to activate the hardware button because the location of the instruction to activate the hardware button is tied to the location of the physical hardware button.

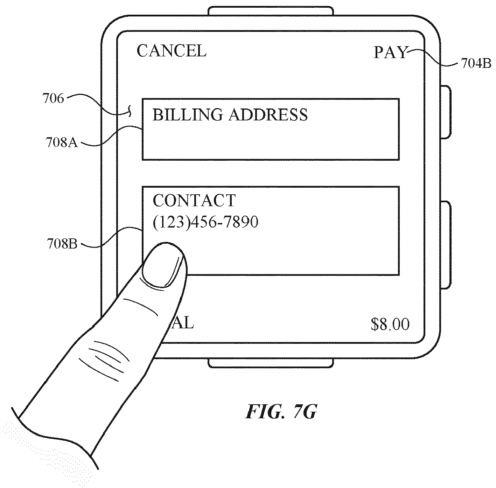

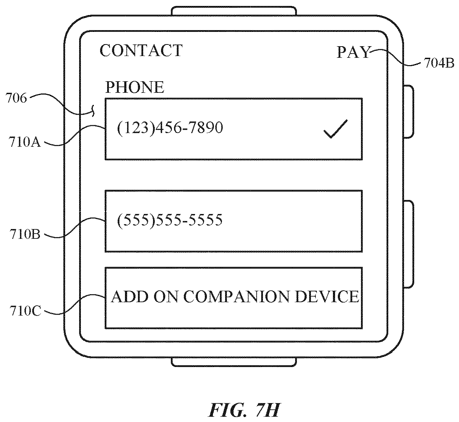

In some embodiments, as illustrated in FIGS. 7G-7I, a tap gesture on an additional transactions detail (e.g., 708A or 708B) allows the user to select from among different options for the additional transaction detail. In some embodiments, as illustrated in FIG. 7G, while displaying the additional transaction details (e.g., 708A, 708B), the electronic device 500A detects, via the one or more input devices, selection of a first detail (e.g., 708B) of the additional transaction details (e.g., 708A, 708B). As illustrated in FIG. 7H, in response to detecting selection of (e.g., detecting activation of the affordance corresponding to) the first detail (e.g., 708B) of the additional transaction details, the electronic device 500A displays one or more options (e.g., 710A, 710B, 710C) for the first detail. In some examples, displaying the one or more options includes replacing display of the additional transaction details (e.g., 708A, 708B, 710C) with display of the one or more options (e.g., 710A, 710B, 710C).

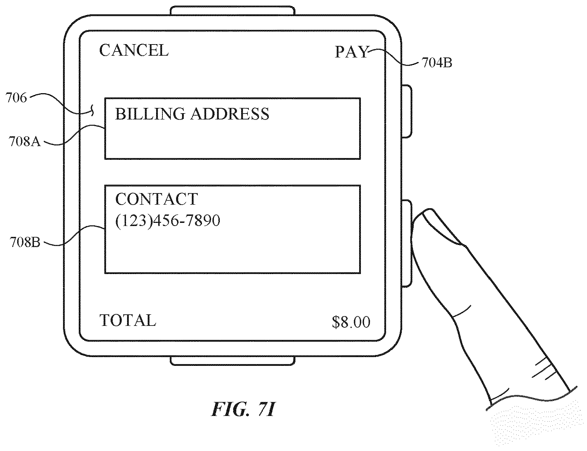

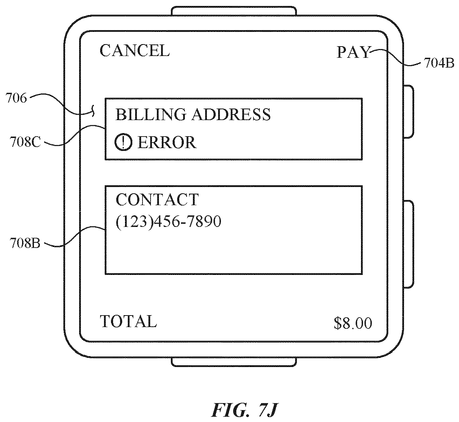

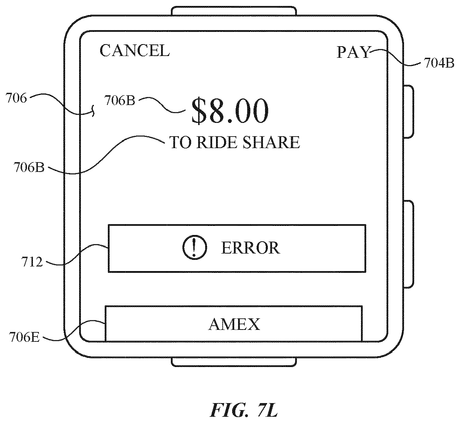

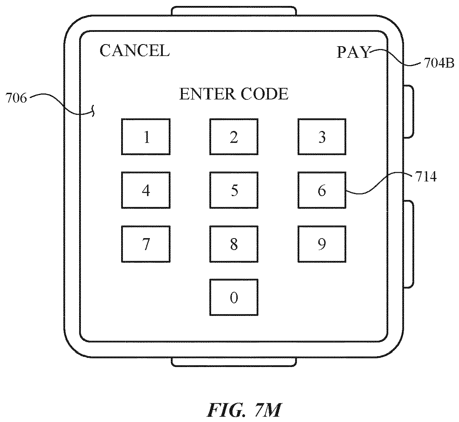

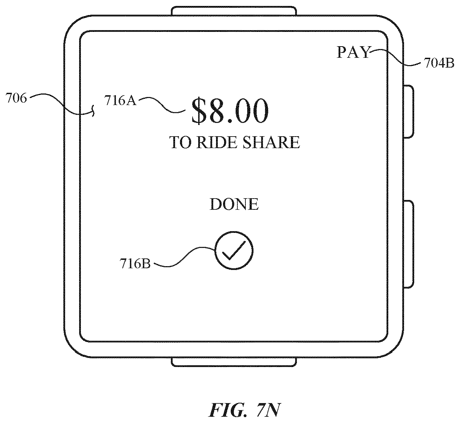

In some embodiments, in accordance with the transaction user interface being displayed (e.g., as in FIGS. 7C-7L): the electronic device 500A monitors (e.g., at all times that the transaction user interface is displayed) the hardware button for activation (e.g., monitoring for a double-press of the hardware button). As illustrated in FIGS. 71 and 7K, the electronic device detects activation of the hardware button (e.g., detecting a double-press of the hardware button). In some examples, FIG. 7I and 7K are alternative flows of the technique, illustrating that the electronic device 500A is enabled to detect activation of the hardware button while different user interfaces (e.g., of the payment application) are displayed. In some examples, the activation of the hardware button is detected while the device is in an unlocked state (and, optionally, while the device has continuously been on a user's wrist since the device was unlocked by providing authentication credentials to the device, where the continuous presence of the device on the user's wrist is determined by periodically checking that the device is in contact with the user's skin). In some examples, as illustrated in FIG. 7M and 7N, in response to detecting activation of the hardware button, in accordance with a determination that the activation of the hardware button meets transaction authorization criteria (e.g., a double press input where the press inputs are received within a predetermined time threshold of each other and optionally that the contact on the button meets user authentication criteria such as matching a fingerprint in a fingerprint database or having been unlocked and maintained on a user's wrist since being unlocked, and, for example, in accordance with a determination that there is no error with the transaction parameters), the electronic device 500A proceeds with a transaction (e.g., proceeding with making payment, transmitting payment information) for the activity (e.g., using the payment account of an electronic wallet of the electronic device). In some examples, in response to detecting activation of the hardware button, in accordance with a determination that the activation of the hardware button does not meet the transaction authorization criteria, the electronic device 500A forgoes authorizing the transaction and, optionally, displays a different user interface that corresponds to the activation of the hardware button (e.g., displaying representations of a set of recently used apps or displaying representations of a plurality of contacts of the user in response to a single press of the hardware button). For example, a double press of the hardware button results in proceeding with the transaction and a single press of the hardware button results in displaying a user interface for a different application. In some embodiments, the electronic device 500A detects activation (e.g. double press) of the hardware button and, in response, if transaction details are OK, proceeds with the transaction (as illustrated in FIGS. 7M-7N), and, if transaction details are not OK, displays an error (as illustrated in FIGS. 7J and 7L).

In some embodiments, as illustrated in FIG. 71 and 7K, the electronic device 500A detects activation of the hardware button (e.g., detecting a double-press of the hardware button). As illustrated in FIGS. 7M-7N, in response to detecting activation of the hardware button, in accordance with a determination that transaction processing criteria have been met, including a criterion that there is no error with the transaction parameters (and, optionally, that the activation of the hardware button meets transaction authorization criteria), the electronic device 500A proceeds with a transaction (e.g., proceeding with making payment, transmitting payment information) for the activity (e.g., using the payment account of an electronic wallet of the electronic device). In some examples, the activation of the hardware button is detected while the device is in an unlocked state (and, optionally, while the device has continuously been on a user's wrist since the device was unlocked by providing authentication credentials to the device, where the continuous presence of the device on the user's wrist is determined by periodically checking that the device is in contact with the user's skin). As illustrated in FIGS. 7J and 7L, in response to detecting activation of the hardware button, in accordance with a determination that there is an error with the transaction parameters (e.g., and thus, that the transaction processing criteria, that require that there are no errors with the transaction parameters, have not been met), the electronic device 500A displays, on the display, an error notification (e.g., 708C, 712) indicating that an error has been detected instead of proceeding with the transaction (e.g., foregoing proceeding with the transaction for the activity).

In some embodiments, in accordance with the determination that there is an error with the transaction parameters, the electronic device receives (e.g., from the user) user input, via the one or more input devices (e.g., audio via a personal assistant, detecting activation of an affordance corresponding to an alternative contact 710B), at the electronic device 500A. In response to receiving the user input at the electronic device 500A, the electronic device modifies (e.g., to correct) the transaction parameters based on the user input. In some examples, once the error with the transaction parameters has been corrected, the device will proceed with the transaction in response to detecting an input authorizing the transaction (e.g., activation of the hardware button that meets transaction authorization criteria). In some examples, the error with the transaction is resolved using the techniques described with reference to FIGS. 9A-9N and method 1000.

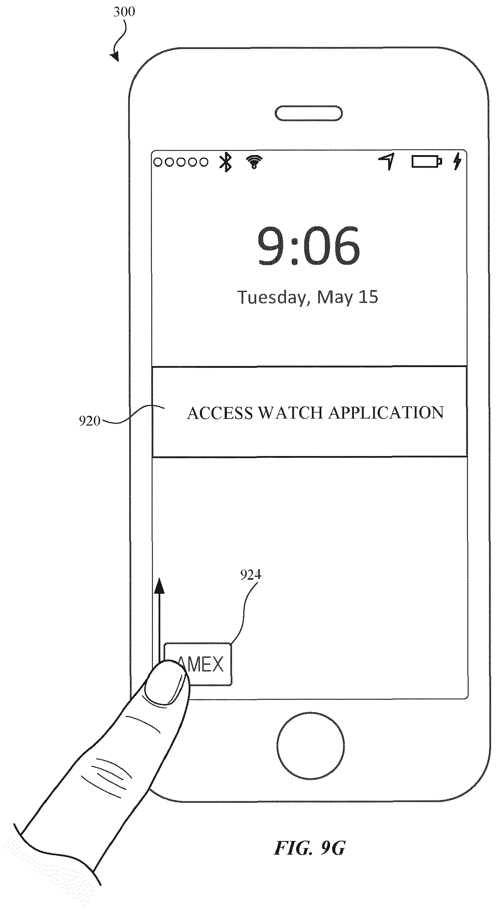

In some embodiments, in accordance with the determination that there is an error with the transaction parameters, the electronic device receives (e.g., from the user) a request to correct the error (e.g., selection of the error notification). In response to receiving the request to correct the error, in accordance with a determination that potentially compatible transaction parameters are available on the electronic device 500A (e.g., in a phone contacts application or database), the electronic device 500A displays one or more of the potentially compatible transaction parameters (e.g., 710A, 710B). In some examples, the potentially compatible transaction parameters (e.g., 710A, 710B) are displayed along with a selectable option (e.g., 710C) to enter additional transaction parameters on a companion device that is different from the electronic device (e.g., an option 710C which, when selected, initiates a process for entering additional transaction parameters on a companion device as described below with reference to FIGS. 9A-9N and method 1000 of FIG. 10). In response to receiving the request to correct the error, in accordance with a determination that potentially compatible transaction parameters are not available on the electronic device, the electronic device 500A displays instructions to enter additional transaction parameters on a companion device (e.g., electronic device 300 of FIG. 9G) that is different from the electronic device 500A (e.g., as described below with reference to FIGS. 9A-9N and method 1000 of FIG. 10).

In some embodiments, as illustrated in FIGS. 7K-7L, displaying, on the display, the error notification (e.g., 708C) indicating that an error has been detected includes replacing display of the instructions (e.g., 706A) to activate the hardware button with display of the error notification (e.g., 708C). In some examples, displaying the error notification includes changing display of the transaction details (e.g., changing a color of the payment amount for the payment transaction).

In some embodiments, the user can switch among payment accounts. In some embodiments, the electronic device 500A receives user input, via the one or more input devices (e.g., a swipe gesture on a touch-sensitive surface at a location corresponding to the graphical representation 706E of the payment account), corresponding to an instruction to select a payment account from among a plurality of payment accounts of an electronic wallet of the electronic device 500A. In response to detecting the user input corresponding to the instruction to select the payment account from among a plurality of payment accounts, the electronic device 500A selects the payment account for use in the transaction for the activity (e.g., without leaving the transaction user interface). In some examples, switching a payment account includes switching between a plurality of payment accounts associated with different payment cards, and switching between the payment account includes selecting different representations of the payment cards. In some examples, switching a payment account includes switching between a plurality of payment accounts associated with a same payment card (e.g., a checking, savings, and credit account associated with a same payment card), and displaying an affordance for selecting an account associated with the payment card. In some examples, when switching from a payment account for a first payment card associated with a single account to a payment account for a second payment card associated with multiple accounts (e.g., in response to a leftward swipe on the representation of the first payment card), the device displays an animation of an affordance for selecting between the multiple accounts associated with the second payment card appearing, and when switching from the payment account associated with the first payment card to the payment account associated with the second payment card (e.g., in response to a rightward swipe on the representation of the second payment card), the device displays an animation of the affordance for selecting between the multiple accounts associated with the second payment card disappearing.

In some embodiments, display of an indication, such as an indication of payment, replaces display of a system user interface element. In some embodiments, displaying the transaction user interface includes replacing a displayed system user interface element (e.g., a time indicator 704A, a date indicator) with an indication of payment (e.g., 704B). In some examples, the respective application does not have the ability to replace the display of the system user interface element (e.g., a time indicator 704A, a date indicator). Accordingly, by replacing the system user interface element (e.g., a time indicator 704A, a date indicator) when displaying the transaction user interface, the electronic device informs the user that the transaction is being handled by a trusted application (e.g., a first-party application, a system-level application, an operating system of the electronic device).

In some embodiments, as illustrated in FIG. 7M, proceeding with the transaction (e.g., proceeding with making payment, transmitting payment information) for the activity (e.g., using the payment account of an electronic wallet of the electronic device) includes: (e.g., subsequent to detecting activation of the hardware button, and optionally, when the electronic device is in an unlocked state, and optionally, while the device is on a user's wrist, such as by detecting that the device is in contact with the user's skin) requesting (e.g., from the user) a passcode (e.g., by displaying the request 714 on the display). In some examples, proceeding with the transaction (e.g., proceeding with making payment, transmitting payment information) for the activity (e.g., using the payment account of an electronic wallet of the electronic device) further includes detecting, via the one or more input devices, the passcode (e.g., as provided by the user). In some examples, proceeding with the transaction (e.g., proceeding with making payment, transmitting payment information) for the activity (e.g., using the payment account of an electronic wallet of the electronic device) includes transmitting (e.g., to a remote server, to a payment processing service) the passcode (e.g., along with the payment information) for processing the transaction. Thus, in some examples, the user authenticates locally (e.g., at the electronic device) by activating (e.g., via a double-press) the hardware button (e.g., while the electronic device is unlocked) and the user authenticates to a remote server (e.g., a payment processing service) via the passcode. In some examples, the passcode is verified locally at the electronic device (rather than being transmitted for processing the transaction). If the passcode is consistent with an enrolled passcode, the electronic device transmits (e.g., via a wireless network connection) payment information to the remote server for the transaction. If the passcode is not consistent with an enrolled passcode, the electronic device forgoes transmitting the payment information to the remote server for the transaction and, optionally, alerts the user that the passcode was not consistent with the enrolled passcode. In some examples, the user is requested to provide one or more other forms of authentication after activating the hardware button (e.g., biometric authentication with a fingerprint sensor on the device or on a companion device) prior to proceeding with the transaction.

In some embodiments, as illustrated in FIG. 7N, the electronic device 500A displays an indication of proceeding with the transaction, an indication that payment has been provided, or an indication that the payment information has been transmitted. In some examples, the electronic device 500A displays, in response to proceeding with the transaction, a user interface including an amount (e.g., 716A) of the transaction and an indication (e.g., checkmark 716B) that the transaction was successful.

FIG. 8 is a flow diagram illustrating a method for managing transactions using an electronic device in accordance with some embodiments. Method 800 is performed at a device (e.g., 100, 300, 500, 500A) with a display, one or more input devices, and a hardware button. Some operations in method 800 are, optionally, combined, the order of some operations is, optionally, changed, and some operations are, optionally, omitted.

As described below, method 800 provides an intuitive way for managing transactions. The method reduces the cognitive burden on a user for managing transactions, thereby creating a more efficient human-machine interface. For battery-operated computing devices, enabling a user to participate in transactions more efficiently, such as by reducing the number of inputs the user is required to enter at the device, conserves power and increases the time between battery charges.

At block 802, the electronic device displays, on the display, an application user interface (e.g., 702) for a respective application (e.g., a third-party application), wherein the application user interface (e.g., 702) includes a transaction affordance (e.g., 702A) for requesting payment for activity associated with the respective application.

In accordance with some embodiments, the transaction affordance (e.g., 702A) displayed in the application user interface (e.g., 702) for the respective application is provided by a payment application of the electronic device (e.g., 500A) that is different from the respective application. In some examples, the payment application is a first-party application provided by the manufacturer of the electronic device. In some examples, the payment application is an electronic wallet application with access to information that is personal to a user of the electronic device and the respective application does not have access to the information. In some examples, the information is payment information (e.g., account number or payment account number) of a payment account (e.g., a credit account) of the electronic wallet application. In some examples, the electronic wallet application has access to information for a plurality of payment accounts associated with the user of the electronic device 500A.

In accordance with some embodiments, the transaction affordance (e.g., 702A) that, when activated, triggers display of the transaction user interface (e.g., 706), is provided by the respective application. In accordance with some embodiments, the respective application is a third-party application. In some examples, prior to displaying the application user interface for a respective application, the electronic device receives a user-provided request to download and install the respective application. In some examples, prior to displaying the application user interface for a respective application, the electronic device receives a user-provided request to download and install the respective application. In some examples, the electronic device is configured to allow the respective application to be uninstalled or deleted from the electronic device based on a user request. In accordance with some embodiments, the activity associated with the respective application includes one or more of a request for transportation, a request for ride sharing, purchasing a service, purchasing a product, and conducting a peer-to-peer transaction.

At block 804, while displaying the application user interface (e.g., 702), the electronic device detects, via the one or more input devices, selection of the transaction affordance. In some examples, detecting selection of the transaction affordance (e.g., 702A) includes detecting a tap input at a location on a touch-sensitive surface corresponding to the transaction affordance (e.g., 702A).

At block 806, in response to detecting selection of the transaction affordance (e.g., 702A), the electronic device displays a transaction user interface (e.g., 706) (e.g., replacing display of the application user interface 702 with the transaction user interface 706) that includes concurrently displaying, at block 808, transaction details (e.g., a payment amount 706B, a recipient of the payment 706C, a name of the respective application, an amount of tax, an indication 706D that the cost of the activity is variable) for the activity associated with the respective application, and, at block 810, instructions (e.g., 706A) to activate the hardware button of the device to authorize payment for the activity associated with the respective application. Thus, the electronic device, by providing a visual indication (via the instruction 706A) to the user that the state of the electronic device has changed to a state where the transaction (of which the transaction details 706B-706D are displayed) can be authorized via activation of the hardware button, indicates to the user a change of state of the device. In some examples, the instructions (e.g., 706A) to activate the hardware button are displayed at a location on the display. In some examples, the location on the display corresponds to (e.g., is adjacent to) the hardware button of the electronic device.

In accordance with some embodiments, displaying the transaction user interface (e.g., 706) further includes displaying a graphical representation (e.g., 706E) of a payment account with which payment will be made if authorization to proceed with the payment transaction is received. In some examples, the payment account is a default payment account. In some examples, the payment account is a payment account selected by the user for payment for the activity. In some examples, the graphical representation of the payment account includes a depiction of a physical payment card associated with the payment account. In some examples, in response to receiving input corresponding to an instruction to scroll the transaction user interface (e.g., 706), the electronic device scrolls the transaction user interface (e.g., 706) on the display to display the graphical representation of the payment account. In some examples, an electronic wallet application of the electronic device stores the payment account (and, optionally, one or more additional payment accounts). The payment account (and, optionally, the one or more additional payment accounts) is an account of the user of the electronic device.

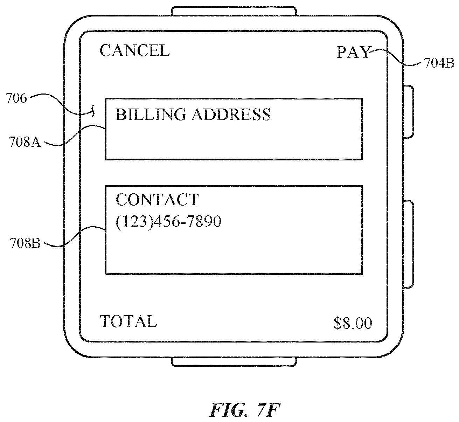

In accordance with some embodiments, the transaction details include information (e.g., 706B) about a cost of the activity. In some examples, the transaction details include a total cost for the activity. In some examples, the transaction details include a shipping cost for the activity. In accordance with some embodiments, in accordance with a determination that the activity has a variable cost, the transaction details include an indication (e.g., 706D) that the activity has a variable cost. Thus, the electronic device, by providing a visual indication (via the indication 706D) that the detected transaction has a variable cost, informs the user that the cost has not been finalized and that the user can perform a scroll operation (e.g., scroll down operation as illustrated in FIG. 7E) to see pre-charges or pre-authorization amounts (e.g., "Total $8.00" as illustrated in FIG. 7F, even if those are not the final amounts), thereby improving the user-machine interface by reducing the risk of erroneous input. In some examples, in response to receiving input corresponding to an instruction to scroll the transaction user interface (e.g., 706), the electronic device scrolls the transaction user interface (e.g., 706) on the display to display a total cost for payment. In some examples, in response to receiving input corresponding to an instruction to scroll the transaction user interface (e.g., 706), the electronic device scrolls the transaction user interface (e.g., 706) on the display to display a pre-authorization amount (or a pre-charge amount).

In accordance with some embodiments, while displaying the transaction user interface (e.g., 706) that includes the transaction details (e.g., 708A, 708B, contact information, shipping address, tax, total cost) and the instructions (e.g., 706A) to activate the hardware button, the electronic device receives input, via the one or more input devices, corresponding to an instruction (e.g., a user request to the electronic device 500A) to scroll the transaction user interface (e.g., 706), and in response to receiving the input corresponding to the instruction to scroll the transaction user interface (e.g., 706), the electronic device displays additional transaction details (e.g., 708A, 708B, contact information, shipping address, tax, total cost) for the activity associated with the respective application.

In accordance with some embodiments, the instructions (e.g., 706A) to activate the hardware button are displayed at a location on the display that is determined based on a location of the hardware button (e.g., adjacent to the hardware button). In some examples, in accordance with a determination that the hardware button is in a first location, displaying the instructions (e.g., 706A) at a first location on the display, and in accordance with a determination that the hardware button is in a second location, displaying the instructions (e.g., 706A) at a second location on the display that is different from the first location. Thus, by arranging the instructions (e.g., 706A) adjacent to the hardware button that should be activated to authorize the transaction, the user is informed of the proper hardware button (e.g., from among multiple buttons) for authorizing the transaction and the user can avoid extraneous (or erroneous) button presses, such as button presses of incorrect buttons that would cause the electronic device to transition to a state where activation of the hardware button (even the proper hardware button) does not authorize the transaction. In accordance with some embodiments, displaying additional transaction details for the activity associated with the respective application includes foregoing scrolling the instructions to activate the hardware button to activate the hardware button, and scrolling the additional transaction details (e.g., 708A, 708B) onto the display. In some examples, the instructions to activate the hardware button remains displayed at the location on the display while the additional transaction details scrolls onto the display. In some examples, the instructions (e.g., 706A) to activate the hardware button fades out on the display while the additional transaction details scrolls onto the display. By fading out, rather than scrolling, the instructions (e.g., 706A), the electronic device avoids misaligning the instructions (e.g., 706A) with a corresponding hardware button, thus user can avoid extraneous button presses, such as button presses of incorrect buttons that would cause the electronic device to transition to a state where activation of the hardware button (even the proper hardware button) does not authorize the transaction. In some examples, electronic device fades away the instructions (e.g., 706A) to activate the hardware button as the electronic device scrolls the transaction user interface (e.g., 706) to reveal the additional transaction details. As a result, the electronic device does not vary the location of the displayed instructions (e.g., 706A) to activate the hardware button because the location of the instruction to activate the hardware button is tied to the location of the physical hardware button. In accordance with some embodiments, displaying additional transaction details for the activity associated with the respective application includes scrolling the additional transaction details (e.g., 708A, 708B) onto the display such that the additional transaction details obscure the instructions to activate the hardware button.

In accordance with some embodiments, while displaying the additional transaction details (e.g., 708A, 708B), the electronic device detects, via the one or more input devices, selection of a first detail (e.g., 708B) of the additional transaction details (e.g., 708A, 708B), and, in response to detecting selection of (e.g., detecting activation of the affordance corresponding to) the first detail (e.g., 708B) of the additional transaction details, the electronic device displays one or more options (e.g., 710A, 710B, 710C) for the first detail. In some examples, displaying the one or more options includes replacing display of the additional transaction details (e.g., 708A, 708B) with display of the one or more options (e.g., 710A, 710B, 710C).

In accordance with some embodiments, in accordance with the transaction user interface being displayed, the electronic device monitors the hardware button for activation, detects activation of the hardware button, and, in response to detecting activation of the hardware button, in accordance with a determination that the activation of the hardware button meets transaction authorization criteria, proceeds with a transaction for the activity. In some examples, in response to detecting activation of the hardware button, in accordance with a determination that the activation of the hardware button does not meet the transaction authorization criteria, the electronic device forgoes authorizing the transaction and, optionally, displays a different user interface that corresponds the activation of the hardware button.

In accordance with some embodiments, the electronic device detects activation of the hardware button, and, in response to detecting activation of the hardware button, in accordance with a determination that transaction processing criteria have been met, including a criterion that there is no error with the transaction parameters (and, optionally, that the activation of the hardware button meets transaction authorization criteria), proceeds with a transaction for the activity, and, in accordance with a determination that there is an error with the transaction parameters, displays, on the display, an error notification (e.g., 708C) indicating that an error has been detected instead of proceeding with the transaction. Thus, the electronic device provides a visual indication (e.g., 708C) of an automatically detected error condition (e.g., error with the transaction parameters), thereby prompting the user to provide input to correct the error. In some examples, the error with the transaction is resolved using the techniques described with reference to FIGS. 9A-9N and method 1000. In some examples, the activation of the hardware button is detected while the device is in an unlocked state (and, optionally, while the device has continuously been on a user's wrist since the device was unlocked by providing authentication credentials to the device, where the continuous presence of the device on the user's wrist is determined by periodically checking that the device is in contact with the user's skin).

In accordance with some embodiments, the electronic device, in accordance with the determination that there is an error with the transaction parameters, receives user input, via the one or more input devices (e.g., audio via a personal assistant, detecting activation of an affordance corresponding to an alternative contact 710B), at the electronic device, and, in response to receiving the user input at the electronic device, modifies the transaction parameters based on the user input. Thus, the electronic device, by providing the user with the ability to provide input to correct the error condition (e.g., the error with the transaction parameters), reduces the need for the user to perform complicated navigation of the user interface to correct the error condition. In some examples, once the error with the transaction parameters has been corrected, the electronic device proceeds with the transaction in response to detecting an input authorizing the transaction.

In accordance with some embodiments, the electronic device, in accordance with the determination that there is an error with the transaction parameters, receives a request to correct the error, and, in response to receiving the request to correct the error, in accordance with a determination that potentially compatible transaction parameters are available on the electronic device, displays one or more of the potentially compatible transaction parameters (e.g., 710A, 710B), and, in accordance with a determination that potentially compatible transaction parameters are not available on the electronic device, displays instructions to enter additional transaction parameters on a companion device that is different from the electronic device. In some examples, the potentially compatible transaction parameters (e.g., 710A, 710B) are displayed along with a selectable option (e.g., 710C) to enter additional transaction parameters on a companion device that is different from the electronic device (e.g., an option 710C which, when selected, initiates a process for entering additional transaction parameters on a companion device). Thus, the electronic device. by providing the user with a visual indication (e.g., 708C) of an automatically detected error condition (e.g., error with the transaction parameters, no ), prompts the user to provide input to correct the error.

In accordance with some embodiments, displaying, on the display, the error notification (e.g., 708C) indicating that an error has been detected includes replacing display of the instructions (e.g., 706A) to activate the hardware button with display of the error notification (e.g., 708C). Thus, the electronic device, by providing the user with a visual indication (e.g., 708C) of an automatically detected error condition (e.g., error with the transaction parameters), prompts the user to provide input to correct the error and indicates to the user that in the current state, as a result of the error, the hardware button cannot be used to authorize the transaction. In some examples, the error with the transaction is resolved using the techniques described with reference to FIGS. 9A-9N and method 1000. In some examples, displaying the error notification (e.g., 708C) includes changing display of the transaction details (e.g., changing a color of the payment amount for the payment transaction).

In accordance with some embodiments, the electronic device receives user input, via the one or more input devices (e.g., a swipe gesture, such as a left swipe gesture or a right swipe gesture, on a touch-sensitive surface at a location corresponding to the graphical representation 906E of the payment account), corresponding to an instruction to select a payment account from among a plurality of payment accounts of an electronic wallet of the electronic device, and, in response to detecting the user input corresponding to the instruction to select the payment account from among a plurality of payment accounts, selects the payment account for use in the transaction for the activity. In some examples, switching a payment account includes switching between a plurality of payment accounts associated with different payment cards, and switching between the payment account includes selecting different representations of the payment cards. In some examples, switching a payment account includes switching between a plurality of payment accounts associated with a same payment card (e.g., a checking, savings, and credit account associated with a same payment card), and displaying an affordance for selecting an account associated with the payment card. In some examples, when switching from a payment account for a first payment card associated with a single account to a payment account for a second payment card associated with multiple accounts, the device displays an animation of an affordance for selecting between the multiple accounts associated with the second payment card appearing, and when switching from the payment account associated with the first payment card to the payment account associated with the second payment card, the device displays an animation of the affordance for selecting between the multiple accounts associated with the second payment card disappearing.

In accordance with some embodiments, displaying the transaction user interface includes replacing a displayed system user interface element (e.g., a time indicator 704A, a date indicator) with an indication of payment (e.g., 704B). Thus, by replacing the system user interface element (e.g., a time indicator 704A, a date indicator) when displaying the transaction user interface, the electronic device informs the user that the transaction is being handled by a trusted application (e.g., a first-party application, a system-level application, an operating system of the electronic device), and therefore the user avoids providing additional inputs to the electronic device to confirm that the transaction is being handled by a trusted application. In some examples, the respective application does not have the ability to replace the display of the system user interface element (e.g., a time indicator 704A, a date indicator).

In accordance with some embodiments, proceeding with the transaction for the activity includes, subsequent to detecting activation of the hardware button, and optionally, when the electronic device is in an unlocked state, and optionally, while the device is on a user's wrist, such as by detecting that the device is in contact with the user's skin, requesting a passcode (e.g., by displaying the request 714 on the display), detecting, via the one or more input devices, the passcode, and transmitting (e.g., to a remote server or to a payment processing service) the passcode (e.g., along with the payment information) for processing the transaction. In some examples, the user authenticates locally (e.g., at the electronic device) by activating (e.g., via a double-press) the hardware button and the user authenticates to a remote server (e.g., a payment processing service) via the passcode. In some examples, the passcode is verified locally at the electronic device. If the passcode is consistent with an enrolled passcode, the electronic device transmits payment information to the remote server for the transaction. If the passcode is not consistent with an enrolled passcode, the electronic device forgoes transmitting the payment information to the remote server for the transaction and, optionally, alerts the user that the passcode was not consistent with the enrolled passcode. In some examples, the user is requested to provide one or more other forms of authentication after activating the hardware button (e.g., biometric authentication with a fingerprint sensor) prior to proceeding with the transaction.

Note that details of the processes described above with respect to method 800 (e.g., FIG. 8) are also applicable in an analogous manner to the methods described below. For example, method 1000 optionally includes one or more of the characteristics of the various methods described above with reference to method 800. For example, transaction user interface 706 described with reference to FIGS. 7A-7O and FIG. 8 is, in some examples, analogous to the transaction user interface 906 described with reference to FIGS. 9A-9N an FIG. 10. For brevity, these details are not repeated below.

FIGS. 9A-9N illustrate exemplary user interfaces for transactions, in accordance with some embodiments. The user interfaces in these figures are used to illustrate the processes described below, including the processes in FIG. 10.

In some embodiments, electronic device 500B includes a display, one or more input devices, and, optionally, a hardware button (e.g., a mechanical button that is configured to enable a secure payment module to provide payment information for use in a payment transaction). In some embodiments, electronic device 500B is a smartwatch electronic device. In some embodiments, device 500B includes some or all of the features of device 100, device 300, device 500, or device 500B.

In some embodiments, as illustrated in FIG. 9A, the electronic device 500B displays a transaction user interface (e.g., 906) that includes concurrently displaying: transaction details (e.g., a payment amount 906B, a recipient of the payment 906C, a name of the respective application, an amount of tax) for activity associated with a respective application and instructions (e.g., 906A) to activate the hardware button of the device to authorize payment for a transaction for an activity associated with the respective application. In some examples, the electronic device 500B also displays a graphical representation (e.g., 906E) of a payment account with which payment will be made (e.g., by the electronic device 500B) if authorization to proceed with the payment transaction is received (e.g., via a double press of the hardware button by the user).

As illustrated in FIG. 9A, the electronic device 500B receives (e.g., from a user, based on a user input) a request (e.g., activation of a hardware button and, optionally, a passcode or fingerprint authentication) to proceed with the transaction using transaction parameters (e.g., phone number, email address, billing address, and/or shipping address), as described, for example, above with reference to FIGS. 7A-7O and method 800 of FIG. 8.

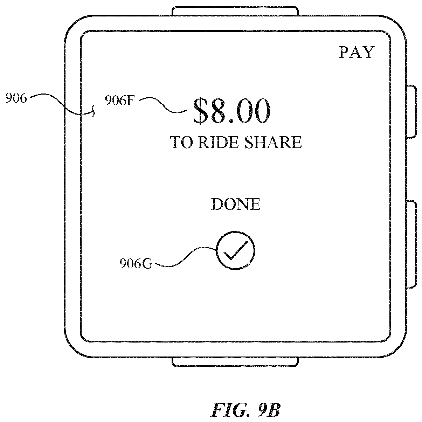

In some embodiments, as illustrated in FIG. 9B, in response to the request to proceed with the transaction, in accordance with a determination that transaction processing criteria have been met, including a criterion that there was no error with the transaction parameters, the electronic device 500B proceeds (e.g., provided that there are no other impediments to proceeding with the transaction) with the transaction. In some examples, proceeding with the transaction includes transmitting payment information to a remote server or a payment processing server. In some embodiments, as illustrated in FIG. 9B, the electronic device 500B displays an indication of proceeding with the transaction, an indication that payment has been provided, or an indication that the payment information has been transmitted. In some examples, the electronic device 500B displays, in response to proceeding with the transaction, a user interface including an amount (e.g., 906F) of the transaction and an indication (e.g., checkmark 906G) that the transaction was successful.

In some embodiments, proceeding with the transaction is further conditioned upon a determination as to whether or not the request to proceed with the transaction meets transaction authorization criteria (e.g., a double press input where the press inputs are received within a predetermined time threshold of each other and optionally that the contact on the button meets user authentication criteria such as matching a fingerprint in a fingerprint database or having been unlocked and maintained on a user's wrist since being unlocked), if the request to proceed with the transaction does not meet the transaction authorization criteria, the device does not proceed (e.g., forgoes proceeding) with the transaction, and if request to proceed with the transaction meets the transaction authorization criteria, the device proceeds with the transaction.

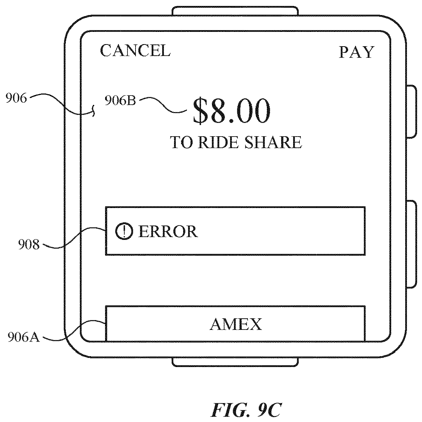

As illustrated in FIG. 9C, in response to the request to proceed with the transaction, in accordance with a determination that there is an error with the transaction parameters (e.g., and thus, that the transaction processing criteria, that require that there are no errors with the transaction parameters, have not been met), the electronic device displays an error notification (e.g., 908) indicating that an error has been detected. Thus, the electronic device 500B informs the user of an error.

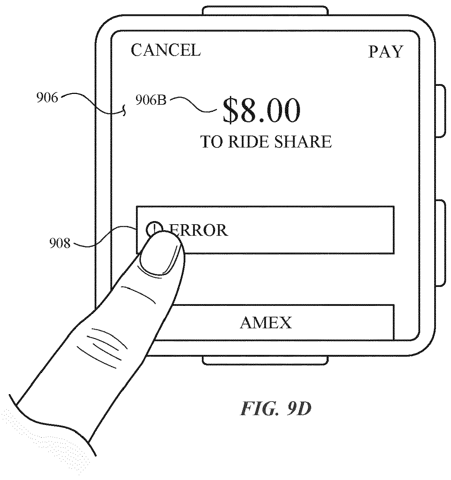

As illustrated in FIG. 9D, the electronic device 500B receives, via the one or more input devices, a request to correct the error (e.g., detecting activation of the error notification 908).

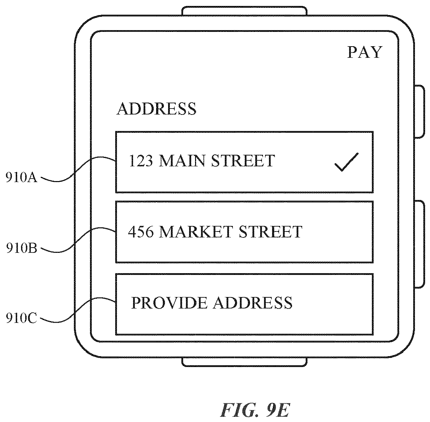

As illustrated in FIG. 9E, in response to receiving the request to correct the error, in accordance with a determination that potentially compatible transaction parameters are available on the electronic device (e.g., in a memory of the electronic device, in a contact phone book of the electronic device), the electronic device 500B displays, on the display, one or more of the potentially compatible transaction parameters (e.g., 910A, 910B).

In some embodiments, as illustrated in FIG. 9E, if there are potentially compatible transaction parameters, the electronic device selects a transaction parameter as a default transaction parameter. In response to receiving the request to correct the error, in accordance with the determination that potentially compatible transaction parameters are available on the electronic device (e.g., in a memory of the electronic device, in a contact phone book of the electronic device), the electronic device 500B updates the transaction parameters to include a default transaction parameter of the potentially compatible transaction parameters for use in the transaction. In some examples, the electronic device displays an indication (such as a check mark) next to the selected default transaction parameter to indicate to the user that the default transaction parameter is selected. In some examples, the electronic device displays, on the display, one or more affordances (e.g., 910A, 910B) corresponding to one or more respective potentially compatible transaction parameters. In some examples, the user can activate one of the one or more affordances corresponding to one or more respective potentially compatible transaction parameters to cause the electronic device to update the transaction parameters. For example, the electronic device receives activation of an affordance corresponding to a home address and updates the transaction parameters to include the home address for billing purposes.

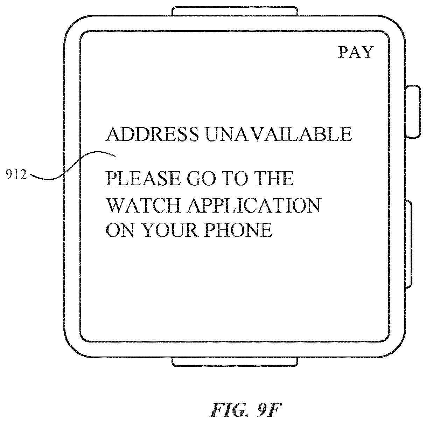

As illustrated in FIG. 9F, in accordance with a determination that potentially compatible transaction parameters are not available on the electronic device 500B, the electronic device 500B displays, on the display, instructions (e.g., 912) to enter additional transaction parameters on a companion device (e.g., 300) that is different from the electronic device 500B. Thus, the electronic device, by providing the user with a visual indication (e.g., 912) of an automatically detected error condition (e.g., potentially compatible transaction parameters are not available on the electronic device 500B), prompts the user to provide input at a separate companion device to correct the error. In some examples, the companion device is a smart phone. In some examples, the companion device is a laptop device.

In some embodiments, the electronic device 500B transmits, to the companion device 300, a request regarding a transaction parameter entry user interface. As illustrated in FIG. 9G, in some examples, the companion device 300 displays an indication (e.g., 920, 924) of the request regarding the transaction parameter entry user interface.

In some embodiments, activating the indication of the request regarding the transaction parameter entry user interface enables the user to quickly enter the transaction parameter. Thus, the electronic device, by providing the user with a mechanism to enter the transaction parameter, reduces the number of user inputs required to access the mechanism. In some examples, as illustrated in FIG. 9G, activation (e.g., by the user), on the companion device 300, of the indication (e.g., 924) of the request regarding the transaction parameter entry user interface causes the companion device to display, on a display of the companion device, the transaction parameter entry user interface (e.g., 922). Thus, the electronic device, by providing the user with a visual indication (e.g., 924) of an automatically detected error condition (e.g., error with the transaction parameters, detected at the electronic device 500B), prompts the user to provide input to correct the error. In some examples, the transaction parameter entry user interface is a user interface of a configuration application on the companion device that corresponds to the electronic device. In some examples, the configuration application is used by the user on the companion device to configure the electronic device. In some examples, the companion device receives entry (e.g., using a virtual keyboard displayed on the display of the companion device) of a transaction parameter. In response to receiving the transaction parameter, the companion device transmits the transaction parameter to the electronic device. Thus, the user can use the companion device, which in some examples is larger and has a more accommodating user interface for receiving user entry, for entering information (e.g., an additional transaction parameter) that is needed (or helpful) at the electronic device 500B.

In some embodiments, the user uses the transaction parameter entry user interface (e.g., 922) of the companion device to enter information that is then sent the electronic device 500B. In some examples, the electronic device 500B receives (e.g., from the companion device) a respective additional transaction parameter. In some examples, the transaction parameter that the user enters (or selects, or otherwise provides) at the companion device is transmitted (e.g., by the companion device) to the electronic device for use in the transaction.

In some embodiments, as illustrated in FIG. 91, in response to receiving the respective additional transaction parameter, the electronic device 500B updates the transaction user interface (e.g., 906) in accordance with the respective additional transaction parameter, on the display (e.g., based on the respective additional transaction parameter). Thus, the electronic device, by updating the transaction user interface (e.g., 906), indicates to the user that the electronic device has received the update to the transaction parameters and, optionally, also indicates that the electronic device has transitioned to a state where activation of the hardware button authorizes the transaction. In some examples, in response to receiving the transaction parameter, the electronic device 500B updates the display. In some examples, in response to receiving the transaction parameter, the electronic device 500B updates the display to cease displaying the error notification (e.g., 908). In some examples, in response to receiving the transaction parameter, the electronic device 500B displays the transaction parameter.

In some embodiments, in response to the instructions (e.g., 912) in the transaction user interface on the electronic device 500B, the user causes the companion device 300 to open the companion application (e.g., 926) on the companion device 300 and the user is automatically presented with the transaction parameter entry user interface (e.g., 922). Thus, the electronic device, by providing the user with a visual indication (e.g., 912) of an automatically detected error condition (e.g., error with the transaction parameters, potentially compatible transaction parameters are not available on the electronic device 500B), prompts the user to provide input on the companion device (e.g., 300) to correct the error.

In some embodiments, the companion device 300 automatically launches the transaction parameter entry user interface (e.g., 922) on the companion device 300 in response to receiving the request regarding the transaction parameter entry user interface from the electronic device 500B. Thus, the companion device (e.g., 300), by providing the user with a visual indication (e.g., transaction parameter entry user interface 922) of an automatically detected error condition (e.g., error with the transaction parameters, potentially compatible transaction parameters are not available on the electronic device 500B), prompts the user to provide input to correct the error and without requiring the user to provide inputs to launch the transaction parameter entry user interface (e.g., 922).

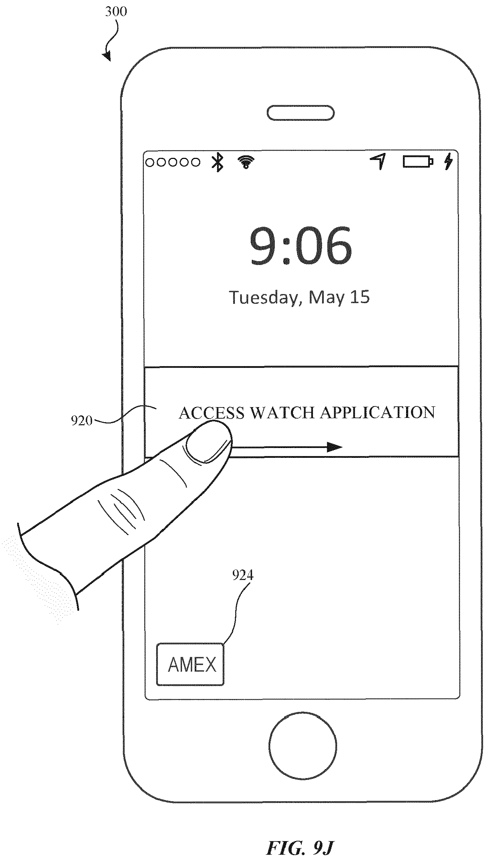

In some embodiments, as illustrated in FIGS. 9J-9N, the companion device 300 displays an indication (e.g., 920), which the user can activate to access a companion application on the companion device 300. Thus, the companion device, by providing the user with a visual indication (e.g., 708C) of an automatically detected error condition (e.g., error with the transaction parameters), prompts the user to provide input to correct the error and reduces the user inputs required to correct the error. For example, the companion application is configured to send information to the electronic device 500B.

As illustrated in FIG. 9J, the companion device 300 receives (e.g., from a user) a request to open a companion application (e.g., 926). In some examples, receiving the request includes detecting activation of an affordance (e.g., 920), such as an affordance displayed on a lock screen or an affordance displayed on a home screen of the companion device 300.

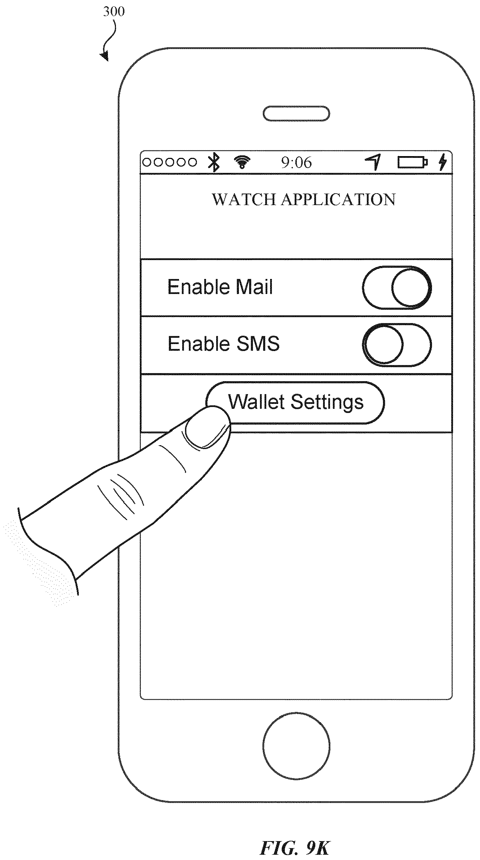

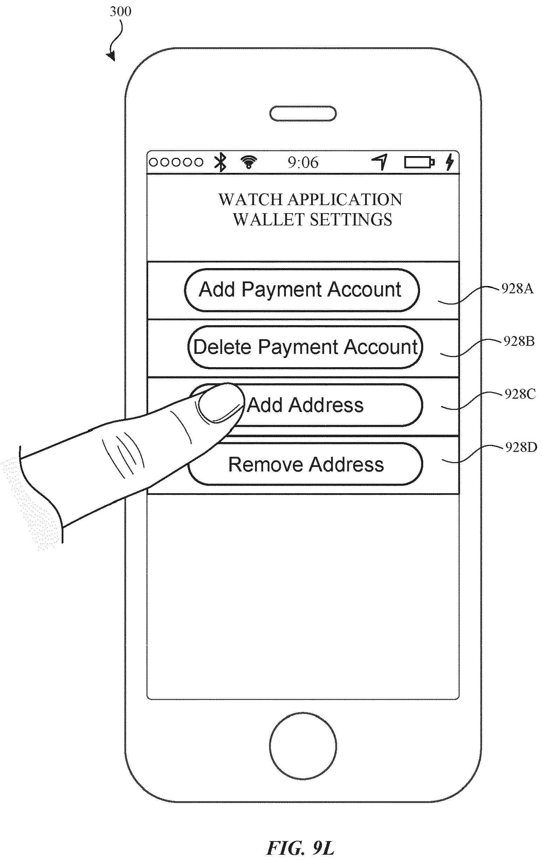

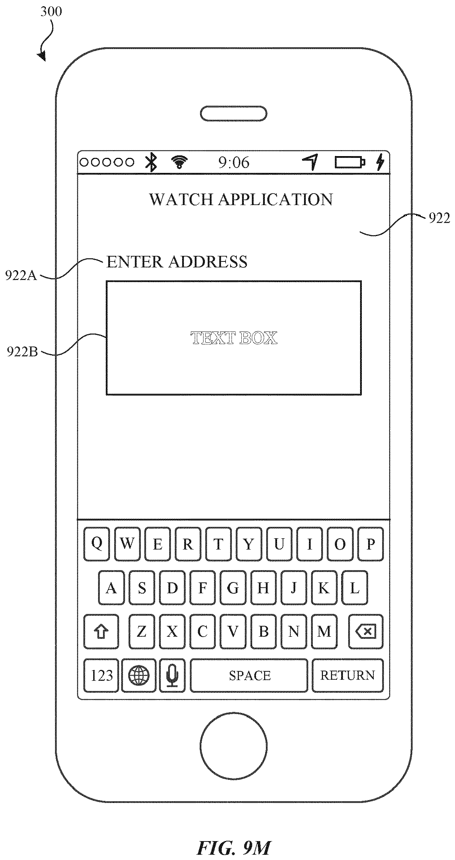

As illustrated in FIG. 9K, the user activates an affordance (e.g., 920) on the companion device 300 that corresponds to the companion application. As illustrated in FIG. 9K, the companion device 300 displays the companion application 926, including various settings for the electronic device 500B. In some examples, the companion device 300 detects activation of an affordance 926A for accessing electronic wallet settings of the electronic device 500B. In response to detecting activation of the affordance 926A for accessing electronic wallet settings of the electronic device 500B, the companion device 300 displays one or more options 928A-928D, including an option (e.g., 928C) to access the transaction parameter entry user interface (e.g., 922) on the companion device 300, as illustrated in FIG. 9L. As illustrated in FIG. 9M, in response to detecting activation of the option (e.g., 928C) to access the transaction parameter entry user interface, the companion device 300 displays the transaction parameter entry user interface (e.g., 922). In some examples, the transaction parameter entry user interface (e.g., 922) is used by the user on the companion device 300 to configure the electronic device. In some examples, the companion device 300 receives entry (e.g., using a virtual keyboard displayed on the display of the companion device) of a transaction parameter at the transaction parameter user interface. In response to receiving the transaction parameter, the companion device 300 transmits the transaction parameter to the electronic device 500B. Thus, the user can use the companion device 300, which in some examples is larger and has a more accommodating user interface for receiving user entry, for entering information (e.g., an additional transaction parameter) that is needed (or helpful) at the electronic device 500B.

In some embodiments, in response to receiving the transaction parameter (e.g., from the companion device), the electronic device 500B updates the transaction parameters to include the respective additional transaction parameter for use in the transaction. Thus, for example, the technique reduces the number of inputs required on the electronic device to update the transaction parameters. For example, if the companion device transmits a mailing address to the electronic device, the electronic device will update the transaction parameters to use the respective additional transaction parameter. Thus, the respective additional transaction parameter is automatically selected for use in the transaction (e.g., the transaction during which the request regarding the transaction parameter entry user interface was transmitted by the electronic device).

In some embodiments, in response to receiving the respective additional transaction parameter (e.g., from the companion device), the electronic device 500B displays, on the display, an indication of the respective additional transaction parameter. Thus, the electronic device, by providing a visual indication (via indication of the respective additional transaction parameter) to the user that the electronic device has automatically detected the respective additional transaction parameter, indicates to the user that the respective additional transaction parameter has been received and, optionally, that the electronic device has changed to a state where the transaction can be authorized via activation of the hardware button. While displaying the indication of the respective additional transaction parameter, the electronic device 500B detects activation of a hardware button of the electronic device (e.g., detecting a double-press of the hardware button). In accordance with a determination that there is no error with the updated transaction parameters that include the respective additional transaction parameter, the electronic device 500B proceeds with the transaction (e.g., proceeding with making payment, transmitting payment information) for the activity (e.g., using the payment account of an electronic wallet of the electronic device). In accordance with a determination that there is an error with the updated transaction parameters, the electronic device 500B displays, on the display, a second error notification indicating that an error has been detected (and foregoing proceeding with the transaction for the activity). In some examples, if there is an error with the updated transaction parameters, the device repeats the process described above starting with FIG. 9A or 9C. In some examples, the activation of the hardware button causes the device to proceed with the transaction from any portion of the transaction user interface (e.g., even when the use has navigated through one or more menus to change a transaction parameter or enter a new transaction parameter for the transaction), so that the "click to pay" instructions do not need to be displayed in order for the device to proceed with the transaction in response to a request to proceed with the transaction that meets transaction processing criteria. Thus, the electronic device, by not requiring the user to navigate the user interface to a particular display prior to authorizing the transaction using the hardware button, reduces the number of user inputs required to authorize the transaction.

In some embodiments, as illustrated in FIG. 91, in response to receiving the respective additional transaction parameter (e.g., from the companion device), the electronic device 500B displays, on the display, instructions (e.g., 906A) to activate a hardware button of the electronic device to authorize payment for the transaction. Thus, the electronic device, by providing a visual indication (via the instruction 906A) to the user that the electronic device has received the respective additional transaction parameter, indicates to the user r that the electronic device has received the respective additional transaction parameter and, optionally, that the electronic device has changed to a state where the transaction can be authorized via activation of the hardware button. In some examples, while displaying the instructions (e.g., 906A) to activate a hardware button of the electronic device to authorize payment for the transaction, the electronic device 500B forgoes displaying the respective additional transaction parameter. In some examples, the electronic device 500B detects activation of the hardware button (e.g., detecting a double-press of the hardware button). In response to detecting activation of the hardware button (e.g., when the electronic device is in an unlocked state, and optionally, while the device is on a user's wrist, such as by detecting that the device is in contact with the user's skin), in accordance with a determination that transaction processing criteria have been met, including a criterion that there is no error with the updated transaction parameters, the electronic device 500B proceeds with a transaction (e.g., proceeding with making payment, transmitting payment information) for the activity (e.g., using the payment account of an electronic wallet of the electronic device). In some embodiments, in response to detecting activation of the hardware button (e.g., when the electronic device is in an unlocked state, and optionally, while the device is on a user's wrist, such as by detecting that the device is in contact with the user's skin), in accordance with a determination that there is an error with the transaction parameters (e.g., and thus, that the transaction processing criteria, that require that there are no errors with the transaction parameters, have not been met), the electronic device 500B displays, on the display, an error notification (e.g., 708C) indicating that an error has been detected (and foregoing proceeding with the transaction for the activity).

In some embodiments, in response to the request to proceed with the transaction, in accordance with the determination that there is an error with the transaction parameters, the electronic device 500B updates a displayed characteristic (e.g., location, size, color) of a displayed user interface element (e.g., the price 906B) to indicate that the error has been detected. Thus, the electronic device, by providing the user with a visual indication (e.g., by updating the displayed characteristic) of an automatically detected error condition (e.g., error with the transaction parameters), prompts the user to provide input to correct the error. In some examples, the price to be paid (e.g., 906B) changes color from blue to red when the electronic device determines that there is an error with the transaction parameters. For example, this indicates to the user that there is an error with the transaction parameters.

In some embodiments, in response to receiving the request to correct the error, in accordance with the determination that potentially compatible transaction parameters are available on the electronic device (e.g., in a memory of the electronic device, in a contact phone book of the electronic device), the electronic device 500B displays, on the display, an entry affordance (e.g., 910C), which when activated, enables the user to provide a transaction parameter at the electronic device (e.g., via dictation, via user-selection from the contacts phone application, via the companion device, as discussed above with reference to FIGS. 9A-9F and method 1000 of FIG. 10), that is not included in the potentially compatible transaction parameters.

In some embodiments, the electronic device 500B detects activation of the entry affordance (e.g., 910C). In response to detecting activation of entry affordance (e.g., 910C), the electronic device 500B monitors audio input received via a microphone of the electronic device 500B. The electronic device 500B updates the transaction parameters based on the audio input received via the microphone of the electronic device. For example, the electronic device 500B processes the audio input to detect words and/or phrases and transcribing the words and/or phrases for use as a transaction parameter, or, optionally, interpreting the words and/or phrases as verbal instructions to retrieve stored data such as email addresses, phone numbers, physical addresses, for use as a transaction parameter.

In some embodiments, the electronic device 500B detects activation of the entry affordance (e.g., 910C). In response to detecting activation of entry affordance (e.g., 910C), the electronic device 500B displays one or more contacts (e.g., addresses, phone numbers) based on contacts (e.g., addresses, phone numbers) stored in a contacts application. The electronic device 500B receives (e.g., from the user) selection of a contact of the one or more contacts. The electronic device 500B updates the transaction parameters based on the selected contact.

In some embodiments, the electronic device 500B detects activation of the entry affordance (e.g., 910C). In response to detecting activation of entry affordance, the electronic device 500B transmits, to the companion device 300, a second request regarding a second transaction parameter entry user interface. In some examples, the companion device 300 displays a second indication of the request regarding the second transaction parameter entry user interface. In some examples, the electronic device receives (e.g., from the companion device) a transaction parameter (e.g., in accordance with transmitting the second request). In some examples, the transaction parameter that the user enters (or selects, or otherwise provides) at the companion device is transmitted (e.g., by the companion device) to the electronic device for use in the transaction. In some examples, in response to receiving the transaction, the electronic device updates the transaction parameters based on the respective additional transaction parameter.

FIG. 10 is a flow diagram illustrating a method for managing transactions using an electronic device in accordance with some embodiments. Method 1000 is performed at a device (e.g., 100, 300, 500, 500B) with a display, one or more input devices, and, optionally, a hardware button and microphone. Some operations in method 1000 are, optionally, combined, the order of some operations is, optionally, changed, and some operations are, optionally, omitted.

As described below, method 1000 provides an intuitive way for managing transactions. The method reduces the cognitive burden on a user for managing transactions, thereby creating a more efficient human-machine interface. For battery-operated computing devices, enabling a user to participate in transactions more efficiently, such as by reducing the number of inputs the user is required to enter at the device or allowing the user to provide inputs at a different device, conserves power and increases the time between battery charges.

At block 1002, the electronic device receives a request to proceed with a transaction using transaction parameters.

At block 1004, in response to the request to proceed with the transaction, in accordance with a determination that there is an error with the transaction parameters, the electronic device displays an error notification (e.g., 908) indicating that an error has been detected. In accordance with some embodiments, in response to the request to proceed with the transaction, in accordance with a determination that transaction processing criteria have been met, including a criterion that there was no error with the transaction parameters, the electronic device proceeds with the transaction. In some examples, proceeding with the transaction includes transmitting payment information to a remote server or a payment processing server. In some examples, proceeding with the transaction is further conditioned upon a determination as to whether or not the request to proceed with the transaction meets transaction authorization criteria; if the request to proceed with the transaction does not meet the transaction authorization criteria, the device does not proceed with the transaction, and if request to proceed with the transaction meets the transaction authorization criteria, the device proceeds with the transaction. In accordance with some embodiments, in response to the request to proceed with the transaction, in accordance with the determination that there is an error with the transaction parameters, the electronic device updates a displayed characteristic (e.g., location, size, color) of a displayed user interface element (e.g., 906B) to indicate that the error has been detected. In some examples, the price to be paid (e.g., 906B) changes color from blue to red when the electronic device determines that there is an error with the transaction parameters, thus indicating to the user that there is an error with the transaction parameters.

At block 1006, the electronic device receives, via the one or more input devices, a request to correct the error (e.g., activation of the error notification 908).

At block 1008, in response to receiving the request to correct the error, in accordance with a determination that potentially compatible transaction parameters are available on the electronic device, at block 1010, the electronic device displays, on the display, one or more of the potentially compatible transaction parameters (e.g., 910A, 910B), and, in accordance with a determination that potentially compatible transaction parameters are not available on the device, at block 1012, the electronic device displays, on the display, instructions (e.g., 912) to enter additional transaction parameters on a companion device (e.g., 300) that is different from the electronic device.

In accordance with some embodiments, in response to receiving the request to correct the error, in accordance with the determination that potentially compatible transaction parameters are available on the electronic device, the electronic device updates the transaction parameters to include a default transaction parameter of the potentially compatible transaction parameters for use in the transaction, and the electronic device displays, on the display, one or more affordances (e.g., 910A, 910B) corresponding to one or more respective potentially compatible transaction parameters. In some examples, the electronic device displays an indication (e.g., a check mark) next to the selected default transaction parameter to indicate to the user that the default transaction parameter is selected. In some examples, the user can activate one of the one or more affordances corresponding to one or more respective potentially compatible transaction parameters to cause the electronic device to update the transaction parameters. For example, the electronic device receives activation of an affordance corresponding to a home address and updates the transaction parameters to include the home address for billing purposes. In accordance with some embodiments, in response to receiving the request to correct the error, in accordance with the determination that potentially compatible transaction parameters are available on the electronic device, the electronic device displays, on the display, an entry affordance, which when activated, enables the user to provide a transaction parameter at the electronic device, that is not included in the potentially compatible transaction parameters.

In accordance with some embodiments, the electronic device detects activation of the entry affordance, in response to detecting activation of entry affordance, monitors audio input received via a microphone of the electronic device, and updates the transaction parameters based on the audio input received via the microphone of the electronic device. In accordance with some embodiments, the electronic device detects activation of the entry affordance, in response to detecting activation of entry affordance, displays one or more contacts (e.g., addresses, phone numbers) based on contacts (e.g., addresses, phone numbers) stored in a contacts application, receives selection of a contact of the one or more contacts, and updates the transaction parameters based on the selected contact. In accordance with some embodiments, the electronic device detects activation of the entry affordance, and, in response to detecting activation of entry affordance, transmits, to the companion device, a second request regarding a second transaction parameter entry user interface, and the companion device displays a second indication of the request regarding the second transaction parameter entry user interface. In some examples, the electronic device receives (e.g., from the companion device) a transaction parameter. In some examples, the transaction parameter that the user enters (or selects, or otherwise provides) at the companion device is transmitted (e.g., by the companion device) to the electronic device for use in the transaction. In some examples, in response to receiving the transaction, the electronic device updates the transaction parameters based on the respective additional transaction parameter.

In accordance with some embodiments, the electronic device transmits, to the companion device, a request regarding a transaction parameter entry user interface, and the companion device displays an indication (e.g., 920) of the request regarding the transaction parameter entry user interface. In accordance with some embodiments, activation, on the companion device, of the indication (e.g., 920) of the request regarding the transaction parameter entry user interface causes display, on a display of the companion device, of the transaction parameter entry user interface (e.g., 922). In some examples, the transaction parameter entry user interface is a user interface of a configuration application on the companion device that corresponds to the electronic device. In some examples, the configuration application is used by the user on the companion device to configure the electronic device. In some examples, the companion device receives entry (e.g., using a virtual keyboard displayed on the display of the companion device) of a transaction parameter. In response to receiving the transaction parameter, the companion device transmits the transaction parameter to the electronic device. In accordance with some embodiments, in response to receiving the transaction parameter (e.g., from the companion device), the electronic device updates the transaction parameters to include the respective additional transaction parameter for use in the transaction.

In accordance with some embodiments, the electronic device receives (e.g., from the companion device) a respective additional transaction parameter, and, in response to receiving the respective additional transaction parameter, updates a transaction user interface (e.g., 906) in accordance with the respective additional transaction parameter, on the display. In some examples, the transaction parameter that the user enters (or selects, or otherwise provides) at the companion device is transmitted (e.g., by the companion device) to the electronic device for use in the transaction. In some examples, the companion device provides the respective additional transaction parameter when it is input on the companion device even if the companion device did not launch the transaction parameter entry user interface based on information from the device. In some examples, in response to receiving the transaction parameter, the electronic device updates the display. In some examples, in response to receiving the transaction parameter, the electronic device updates the display to cease displaying the error notification (e.g., 908). In some examples, in response to receiving the transaction parameter, the electronic device displays the transaction parameter.

In accordance with some embodiments, in response to receiving the respective additional transaction parameter (e.g., from the companion device), the electronic device displays, on the display, an indication of the respective additional transaction parameter, and while displaying the indication of the respective additional transaction parameter, the electronic device detects activation of a hardware button of the electronic device (e.g., detecting a double-press of the hardware button), and, in accordance with a determination that there is no error with the updated transaction parameters that include the respective additional transaction parameter, the electronic device proceeds with the transaction for the activity, and, in accordance with a determination that there is an error with the updated transaction parameters, the electronic device displays, on the display, a second error notification indicating that an error has been detected. In some examples, if there is an error with the updated transaction parameters, the device repeats the process described above starting with FIG. 9A or 9C. In some examples, the activation of the hardware button causes the device to proceed with the transaction from any portion of the transaction user interface.

In accordance with some embodiments, in response to receiving the respective additional transaction parameter (e.g., from the companion device), the electronic device displays, on the display, instructions (e.g., 906A) to activate a hardware button of the electronic device to authorize payment for the transaction, the electronic device detects activation of the hardware button (e.g., detecting a double-press of the hardware button), and, in response to detecting activation of the hardware button (e.g., when the electronic device is in an unlocked state, and optionally, while the device is on a user's wrist, such as by detecting that the device is in contact with the user's skin), in accordance with a determination that transaction processing criteria have been met, including a criterion that there is no error with the updated transaction parameters, the electronic device proceeds with a transaction for the activity, and, in accordance with a determination that there is an error with the transaction parameters, the electronic device displays, on the display, an error notification (e.g., 708C) indicating that an error has been detected. In some examples, while displaying the instructions (e.g., 906A) to activate a hardware button of the electronic device to authorize payment for the transaction, the electronic device forgoes displaying the respective additional transaction parameter.

Note that details of the processes described above with respect to method 1000 (e.g., FIG. 10) are also applicable in an analogous manner to the methods described above. For example, method 800 optionally includes one or more of the characteristics of the various methods described above with reference to method 1000. For example, transaction user interface 706 described with reference to FIGS. 7A-7O and FIG. 8 is, in some examples, analogous to the transaction user interface 906 described with reference to FIGS. 9A-9N an FIG. 10. For brevity, these details are not repeated below.

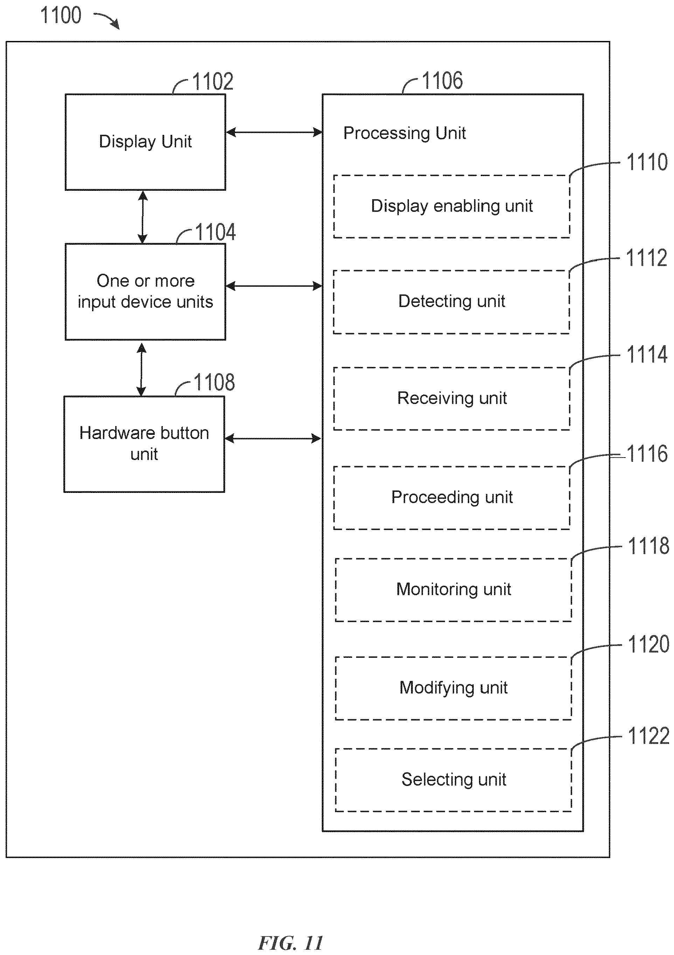

In accordance with some embodiments, FIG. 11 shows an exemplary functional block diagram of an electronic device 1100 configured in accordance with the principles of the various described embodiments. In accordance with some embodiments, the functional blocks of the electronic device 1100 are configured to perform the techniques described above. The functional blocks of the device 1100 are, optionally, implemented by hardware, software, or a combination of hardware and software to carry out the principles of the various described examples. It is understood by persons of skill in the art that the functional blocks described in FIG. 11 are, optionally, combined or separated into sub-blocks to implement the principles of the various described examples. Therefore, the description herein optionally supports any possible combination or separation or further definition of the functional blocks described herein.

As shown in FIG. 11, an electronic device 1100 includes a display unit 1102 configured to display a graphic user interface, one or more input device units 1104, a hardware button unit 1108, and a processing unit 1106 coupled to the display unit 1102, the one or more input device units 1104, and the hardware button unit 1108. In some embodiments, the processing unit 1106 includes a display enabling unit 1110, a detecting unit 1112, a receiving unit 1114, a proceeding unit 1116, a monitoring unit 1118, a modifying unit 1120, and a selecting unit 1122.

The processing unit 1106 is configured to: enable display (e.g., using the display enabling unit 1110), on the display unit 1102, of an application user interface for a respective application, wherein the application user interface includes a transaction affordance for requesting payment for activity associated with the respective application; while enabling display of the application user interface, detect (e.g., using the detecting unit 1112), via the one or more input device units 1104, selection of the transaction affordance; and in response to detecting selection of the transaction affordance, enable display (e.g., using the display enabling unit 1110), on the display unit 1102, of a transaction user interface that includes concurrently displaying: transaction details for the activity associated with the respective application; and instructions to activate the hardware button unit 1108 of the electronic device 1100 to authorize payment for the activity associated with the respective application.

In accordance with some embodiments, the transaction affordance displayed in the user interface for the respective application is provided by a payment application of the electronic device 1100 that is different from the respective application.

In accordance with some embodiments, the transaction affordance that, when activated, triggers display of the transaction user interface, is provided by the respective application. In accordance with some embodiments, the respective application is a third-party application.

In accordance with some embodiments, the activity associated with the respective application includes one or more of: a request for transportation, a request for ride sharing, purchasing a service, purchasing a product, and conducting a peer-to-peer transaction.

In accordance with some embodiments, the transaction details include information about a cost of the activity. In accordance with some embodiments, in accordance with a determination that the activity has a variable cost, the transaction details include an indication that the activity has a variable cost.

In accordance with some embodiments, displaying the transaction user interface further includes displaying a graphical representation of a payment account with which payment will be made if authorization to proceed with the payment transaction is received.

In accordance with some embodiments, the processing unit 1106 is further configured to: while displaying the transaction user interface that includes the transaction details and the instructions to activate the hardware button unit 1108, receive input (e.g., using the receiving unit 1114), via the one or more input device units 1104, corresponding to an instruction to scroll the transaction user interface; and in response to receiving the input corresponding to the instruction to scroll the transaction user interface: enable display (e.g., on the display enabling unit 1110), on the display unit 1102, of additional transaction details for the activity associated with the respective application.

In accordance with some embodiments, the instructions to activate the hardware button unit 1108 are displayed at a location on the display unit 1102 that is determined based on a location of the hardware button unit 1108; displaying additional transaction details for the activity associated with the respective application includes: foregoing scrolling the instructions to activate the hardware button unit 1108; and scrolling the additional transaction details onto the display unit 1102.

In accordance with some embodiments, displaying additional transaction details for the activity associated with the respective application includes: scrolling the additional transaction details onto the display unit 1102 such that the additional transaction details obscure the instructions to activate the hardware button unit 1108.

In accordance with some embodiments, the processing unit 1106 is further configured to: while displaying the additional transaction details, detect (e.g., using the detecting unit 1112), via the one or more input device units 1104, selection of a first detail of the additional transaction details; and in response to detecting selection of the first detail of the additional transaction details, enable display (e.g., using the display enabling unit 1110), on the display unit 1102, of one or more options for the first detail.

In accordance with some embodiments, the processing unit 1106 is further configured to: in accordance with the transaction user interface being displayed: monitor (e.g., using the monitoring unit 1118) the hardware button unit for activation; detect (e.g., using the detecting unit 1112) activation of the hardware button unit; and in response to detecting activation of the hardware button unit 1108, in accordance with a determination that the activation of the hardware button unit 1108 meets transaction authorization criteria, proceed (e.g., using the proceeding unit 1116) with a transaction for the activity.

In accordance with some embodiments, the processing unit 1106 is further configured to: detect (e.g., using the detecting unit 1112) activation of the hardware button unit 1108; and in response to detecting activation of the hardware button unit 1108: in accordance with a determination that transaction processing criteria have been met, including a criterion that there is no error with the transaction parameters, proceed (e.g., using the proceeding unit 1116) with a transaction for the activity; and in accordance with a determination that there is an error with the transaction parameters, enable display (e.g., using the display enabling unit 1110), on the display unit 1102, of an error notification indicating that an error has been detected instead of proceeding with the transaction.

In accordance with some embodiments, the processing unit 1106 is further configured to: in accordance with the determination that there is an error with the transaction parameters, receive user input (e.g., using the receiving unit 1114), via the one or more input device units 1104, at the electronic device 1100; and in response to receiving the user input at the electronic device 1100, modify the transaction parameters based on the user input.

In accordance with some embodiments, the processing unit 1106 is further configured to: in accordance with the determination that there is an error with the transaction parameters, receive (e.g., using the receiving unit 1114) a request to correct the error; and in response to receiving the request to correct the error: in accordance with a determination that potentially compatible transaction parameters are available on the electronic device 1100, enable display (e.g., using the display enabling unit 1110), on the display unit 1102, of one or more of the potentially compatible transaction parameters; and in accordance with a determination that potentially compatible transaction parameters are not available on the electronic device 1100, enable display (e.g., using the display enabling unit 1110), on the display unit 1102, of instructions to enter additional transaction parameters on a companion device that is different from the electronic device 1100.

In accordance with some embodiments, displaying, on the display unit 1102, the error notification indicating that an error has been detected includes: replacing display of the instructions to activate the hardware button unit with display of the error notification.

In accordance with some embodiments, the processing unit 1106 is further configured to: receive user input (e.g., using the receiving unit 1114), via the one or more input device units 1104, corresponding to an instruction to select a payment account from among a plurality of payment accounts of an electronic wallet of the electronic device 1100; and in response to detecting the user input corresponding to the instruction to select the payment account from among a plurality of payment accounts, select the payment account for use in the transaction for the activity.

In accordance with some embodiments, displaying the transaction user interface includes replacing a displayed system user interface element with an indication of payment.

In accordance with some embodiments, proceeding with the transaction for the activity includes: requesting a passcode; detecting, via the one or more input device units 1104, the passcode; and transmitting the passcode for processing the transaction.

The operations described above with reference to FIG. 8 are, optionally, implemented by components depicted in FIGS. 1A-1B or FIG. 11. For example, displaying operation 802 and detecting operation 804 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

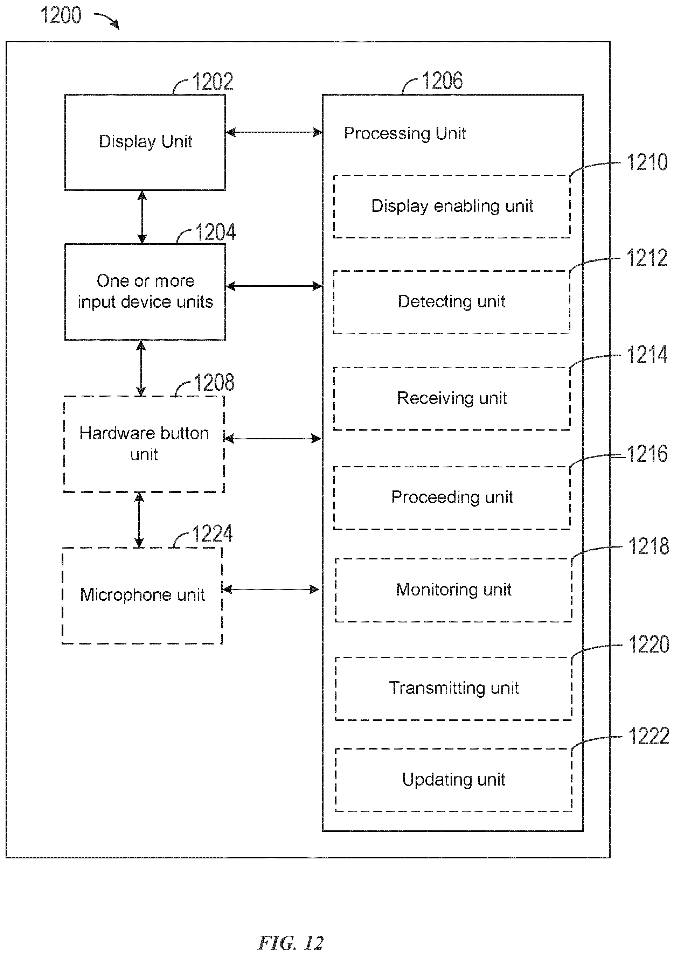

In accordance with some embodiments, FIG. 12 shows an exemplary functional block diagram of an electronic device 1200 configured in accordance with the principles of the various described embodiments. In accordance with some embodiments, the functional blocks of the electronic device 1200 are configured to perform the techniques described above. The functional blocks of the device 1200 are, optionally, implemented by hardware, software, or a combination of hardware and software to carry out the principles of the various described examples. It is understood by persons of skill in the art that the functional blocks described in FIG. 12 are, optionally, combined or separated into sub-blocks to implement the principles of the various described examples. Therefore, the description herein optionally supports any possible combination or separation or further definition of the functional blocks described herein.

As shown in FIG. 12, an electronic device 1200 includes a display unit 1202 configured to display a graphic user interface, one or more input device units 1204, optionally, a hardware button unit 1208, optionally, a microphone unit 1224, and a processing unit 1206 coupled to the display unit 1202, the one or more input device units 1204, optionally, the hardware button unit 1208, and, optionally, the microphone unit 1224. In some embodiments, the processing unit 1206 includes a display enabling unit 1210, a detecting unit 1212, a receiving unit 1214, a proceeding unit 1216, a monitoring unit 1218, a transmitting unit 1220, and an updating unit 1222.

The processing unit 1206 is configured to: receive (e.g., using the receiving unit 1214) a request to proceed with a transaction using transaction parameters; in response to the request to proceed with the transaction, in accordance with a determination that there is an error with the transaction parameters, enable display (e.g., using the display enabling unit 1210), on the display unit 1202, of an error notification indicating that an error has been detected; receive (e.g., using the receiving unit 1214), via the one or more input device units 1204, a request to correct the error; and in response to receiving the request to correct the error: in accordance with a determination that potentially compatible transaction parameters are available on the electronic device 1200, enable display (e.g., using the display enabling unit 1210), on the display unit 1202, of one or more of the potentially compatible transaction parameters; and in accordance with a determination that potentially compatible transaction parameters are not available on the electronic device 1200, enable display (e.g., using the display enabling unit 1210), on the display unit 1202, of instructions to enter additional transaction parameters on a companion device that is different from the electronic device 1200.

In accordance with some embodiments, the processing unit 1206 is further configured to: in response to the request to proceed with the transaction, in accordance with a determination that transaction processing criteria have been met, including a criterion that there was no error with the transaction parameters, proceed (e.g., using the proceeding unit 1216) with the transaction.

In accordance with some embodiments, the processing unit 1206 is further configured to: transmit (e.g., using the transmitting unit 1218), to the companion device, a request regarding a transaction parameter entry user interface; and wherein the companion device displays an indication of the request regarding the transaction parameter entry user interface.

In accordance with some embodiments, activation, on the companion device, of the indication of the request regarding the transaction parameter entry user interface causes display, on a display unit of the companion device, of the transaction parameter entry user interface.

In accordance with some embodiments, the processing unit 1206 is further configured to: receive (e.g., using the receiving unit 1214) a respective additional transaction parameter; and in response to receiving the respective additional transaction parameter, update (e.g., using the updating unit 1222) the transaction user interface in accordance with the respective additional transaction parameter, on the display unit 1202.

In accordance with some embodiments, the processing unit 1206 is further configured to: in response to receiving the transaction parameter, update (e.g., using the updating unit 1222) the transaction parameters to include the respective additional transaction parameter for use in the transaction.

In accordance with some embodiments, the processing unit 1206 is further configured to: in response to receiving the respective additional transaction parameter, enable display (e.g., using the display enabling unit 1210), on the display unit 1202, of an indication of the respective additional transaction parameter; and while displaying the indication of the respective additional transaction parameter, detect (e.g., using the detecting unit 1212) activation of a hardware button unit 1208 of the electronic device 1200; and in accordance with a determination that there is no error with the updated transaction parameters that include the respective additional transaction parameter, proceed (e.g., using the proceeding unit 1216) with the transaction for the activity; and in accordance with a determination that there is an error with the updated transaction parameters, enable display (e.g., using the display enabling unit 1210), on the display unit 1202, of a second error notification indicating that an error has been detected.

In accordance with some embodiments, the processing unit 1206 is further configured to: in response to receiving the respective additional transaction parameter, enable display (e.g., using the display enabling unit 1210), on the display unit 1202, of instructions to activate a hardware button unit 1208 of the electronic device 1200 to authorize payment for the transaction; detect (e.g., using the detecting unit 1212) activation of the hardware button unit 1208; and in response to detecting activation of the hardware button unit 1208: in accordance with a determination transaction processing criteria have been met, including a criterion that there is no error with the updated transaction parameters, proceed (e.g., using the proceeding unit 1216) with a transaction for the activity; and in accordance with a determination that there is an error with the transaction parameters, enable display (e.g., using the display enabling unit 1210), on the display unit 1202, of an error notification indicating that an error has been detected.

In accordance with some embodiments, the processing unit 1206 is further configured to: in response to the request to proceed with the transaction, in accordance with the determination that there is an error with the transaction parameters, update (e.g., using the updating unit 1222) a displayed characteristic of a displayed user interface element to indicate that the error has been detected.

In accordance with some embodiments, the processing unit 1206 is further configured to: in response to receiving the request to correct the error: in accordance with the determination that potentially compatible transaction parameters are available on the electronic device 1200: update (e.g., using the updating unit 1222) the transaction parameters to include a default transaction parameter of the potentially compatible transaction parameters for use in the transaction; and enable display (e.g., using the display enabling unit 1210), on the display unit 1202, of one or more affordances corresponding to one or more respective potentially compatible transaction parameters.

In accordance with some embodiments, the processing unit 1206 is further configured to: in response to receiving the request to correct the error: in accordance with the determination that potentially compatible transaction parameters are available on the electronic device 1200: enable display (e.g., using the display enabling unit 1210), on the display unit 1202, of an entry affordance, which when activated, enables the user to provide a transaction parameter at the electronic device 1200, that is not included in the potentially compatible transaction parameters.

In accordance with some embodiments, the processing unit 1206 is further configured to: detect (e.g., using the detecting unit 1212) activation of the entry affordance; in response to detecting activation of entry affordance, monitor (e.g., using the monitoring unit 1218) audio input received via a microphone unit 1224 of the electronic device 1200; and update (e.g., using the updating unit 1222) the transaction parameters based on the audio input detected via the microphone unit 1224 of the electronic device 1200.

In accordance with some embodiments, the processing unit 1206 is further configured to: detect (e.g., using the detecting unit 1212) activation of the entry affordance; in response to detecting activation of entry affordance, enable display (e.g., using the display enabling unit 1210), on the display unit 1202, of one or more contacts based on contacts stored in a contacts application; receive (e.g., using the receiving unit 1214) selection of a contact of the one or more contacts; and update (e.g., using the updating unit 1222) the transaction parameters based on the selected contact.

In accordance with some embodiments, the processing unit 1206 is further configured to: detect (e.g., using the detecting unit) activation of the entry affordance; in response to detecting activation of entry affordance, transmit (e.g., using the transmitting unit 1220), to the companion device, a second request regarding a second transaction parameter entry user interface; and wherein the companion device displays a second indication of the request regarding the second transaction parameter entry user interface.

The operations described above with reference to FIG. 10 are, optionally, implemented by components depicted in FIGS. 1A-1B or FIG. 12. For example, receiving operation 1002 and displaying operation 1004 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub event, such as activation of an affordance on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

Exemplary methods, non-transitory computer-readable storage media, systems, and electronic devices are set out in the following items:
1. A method, comprising:
   at an electronic device with a display, one or more input devices, and a hardware button;
   displaying, on the display, an application user interface for a respective application, wherein the application user interface includes a transaction affordance for requesting payment for activity associated with the respective application;
   while displaying the application user interface, detecting, via the one or more input devices, selection of the transaction affordance; and
   in response to detecting selection of the transaction affordance, displaying a transaction user interface that includes concurrently displaying:
      transaction details for the activity associated with the respective application; and
      instructions to activate the hardware button of the device to authorize payment for the activity associated with the respective application.
2. The method of item 1, wherein the transaction affordance displayed in the application user interface for the respective application is provided by a payment application of the electronic device that is different from the respective application.
3. The method of any of items 1 - 2, wherein the transaction affordance that, when activated, triggers display of the transaction user interface, is provided by the respective application.
4. The method of any of items 1 - 3, wherein the respective application is a third-party application.
5. The method of any of items 1 - 4, wherein the activity associated with the respective application includes one or more of: a request for transportation, a request for ride sharing, purchasing a service, purchasing a product, and conducting a peer-to-peer transaction.
6. The method of any of items 1 - 5, wherein the transaction details include information about a cost of the activity.
7. The method of any of items 1 - 6, in accordance with a determination that the activity has a variable cost, the transaction details include an indication that the activity has a variable cost.
8. The method of any of items 1 - 7, wherein displaying the transaction user interface further includes displaying a graphical representation of a payment account with which payment will be made if authorization to proceed with the payment transaction is received.
9. The method of any of items 1 - 8, further comprising:
   while displaying the transaction user interface that includes the transaction details and the instructions to activate the hardware button, receiving input, via the one or more input devices, corresponding to an instruction to scroll the transaction user interface; and
   in response to receiving the input corresponding to the instruction to scroll the transaction user interface:
      displaying additional transaction details for the activity associated with the respective application.
10. The method of item 9, wherein:
   the instructions to activate the hardware button are displayed at a location on the display that is determined based on a location of the hardware button;
   displaying additional transaction details for the activity associated with the respective application includes:
      foregoing scrolling the instructions to activate the hardware button; and
      scrolling the additional transaction details onto the display.
11. The method of item 9, wherein displaying additional transaction details for the activity associated with the respective application includes:
   scrolling the additional transaction details onto the display such that the additional transaction details obscure the instructions to activate the hardware button.
12. The method of any of items 9 -11, further comprising:
   while displaying the additional transaction details, detecting, via the one or more input devices, selection of a first detail of the additional transaction details; and
   in response to detecting selection of the first detail of the additional transaction details, displaying one or more options for the first detail.
13. The method of any of items 1 - 12, further comprising:
   in accordance with the transaction user interface being displayed:
   monitoring the hardware button for activation;
   detecting activation of the hardware button; and
   in response to detecting activation of the hardware button, in accordance with a determination that the activation of the hardware button meets transaction authorization criteria, proceeding with a transaction for the activity.
14. The method of any of items 1 -13, further comprising:
   detecting activation of the hardware button; and
   in response to detecting activation of the hardware button:
      in accordance with a determination that transaction processing criteria have been met, including a criterion that there is no error with the transaction parameters, proceeding with a transaction for the activity; and
      in accordance with a determination that there is an error with the transaction parameters, displaying, on the display, an error notification indicating that an error has been detected instead of proceeding with the transaction.
15. The method of item 14, further comprising:
   in accordance with the determination that there is an error with the transaction parameters, receiving user input, via the one or more input devices, at the electronic device; and
   in response to receiving the user input at the electronic device, modifying the transaction parameters based on the user input.
16. The method of item 14, further comprising:
   in accordance with the determination that there is an error with the transaction parameters, receiving a request to correct the error; and
   in response to receiving the request to correct the error:
   in accordance with a determination that potentially compatible transaction parameters are available on the electronic device, displaying one or more of the potentially compatible transaction parameters; and
   in accordance with a determination that potentially compatible transaction parameters are not available on the electronic device, displaying instructions to enter additional transaction parameters on a companion device that is different from the electronic device.
17. The method of any of items 14 - 16, wherein displaying, on the display, the error notification indicating that an error has been detected includes:
   replacing display of the instructions to activate the hardware button with display of the error notification.
18. The method of any of items 1 - 17, further comprising:
   receiving user input, via the one or more input devices, corresponding to an instruction to select a payment account from among a plurality of payment accounts of an electronic wallet of the electronic device; and
   in response to detecting the user input corresponding to the instruction to select the payment account from among a plurality of payment accounts, selecting the payment account for use in the transaction for the activity.
19. The method of any of items 1 - 18, wherein displaying the transaction user interface includes replacing a displayed system user interface element with an indication of payment.
20. The method of any of items 14 - 19, wherein:
   proceeding with the transaction for the activity includes:
   requesting a passcode;
   detecting, via the one or more input devices, the passcode; and
   transmitting the passcode for processing the transaction.
21. A computer-readable storage medium storing one or more programs configured to be executed by one or more processors of an electronic device with a display, one or more input devices, and a hardware button, the one or more programs including instructions for performing the method of any of items 1 - 20.
22. An electronic device, comprising:
   a display;
   one or more input devices;
   a hardware button;
   one or more processors; and
   memory storing one or more programs configured to be executed by the one or more processors, the one or more programs including instructions for performing the method of any of items 1 - 20.
23. An electronic device, comprising:
   a display;
   one or more input devices;
   a hardware button; and
   means for performing the method of any of items 1 - 20.
24. A non-transitory computer-readable storage medium storing one or more programs configured to be executed by one or more processors of an electronic device with a display, one or more input devices, and a hardware button, the one or more programs including instructions for:
   displaying, on the display, an application user interface for a respective application, wherein the application user interface includes a transaction affordance for requesting payment for activity associated with the respective application;
   while displaying the application user interface, detecting, via the one or more input devices, selection of the transaction affordance; and
   in response to detecting selection of the transaction affordance, displaying a transaction user interface that includes concurrently displaying:
      transaction details for the activity associated with the respective application; and
      instructions to activate the hardware button of the device to authorize payment for the activity associated with the respective application.
25. An electronic device, comprising:
   a display;
   one or more input devices;
   a hardware button;
   one or more processors; and
   a memory storing one or more programs configured to be executed by the one or more processors, the one or more programs including instructions for:
      displaying, on the display, an application user interface for a respective application, wherein the application user interface includes a transaction affordance for requesting payment for activity associated with the respective application;
      while displaying the application user interface, detecting, via the one or more input devices, selection of the transaction affordance; and
      in response to detecting selection of the transaction affordance, displaying a transaction user interface that includes concurrently displaying:
         transaction details for the activity associated with the respective application; and
         instructions to activate the hardware button of the device to authorize payment for the activity associated with the respective application.
26. An electronic device, comprising:
   a display;
   one or more input devices;
   a hardware button;
   means for displaying, on the display, an application user interface for a respective application, wherein the application user interface includes a transaction affordance for requesting payment for activity associated with the respective application;
   means, while displaying the application user interface, for detecting, via the one or more input devices, selection of the transaction affordance; and
   means, responsive to detecting selection of the transaction affordance, for displaying a transaction user interface that includes concurrently displaying:
      transaction details for the activity associated with the respective application; and
      instructions to activate the hardware button of the device to authorize payment for the activity associated with the respective application.
27. A method, comprising:
   at an electronic device with a display and one or more input devices:
   receiving a request to proceed with a transaction using transaction parameters;
   in response to the request to proceed with the transaction, in accordance with a determination that there is an error with the transaction parameters, displaying an error notification indicating that an error has been detected;
   receiving, via the one or more input devices, a request to correct the error; and
   in response to receiving the request to correct the error:
      in accordance with a determination that potentially compatible transaction parameters are available on the electronic device, displaying, on the display, one or more of the potentially compatible transaction parameters; and
      in accordance with a determination that potentially compatible transaction parameters are not available on the device, displaying, on the display, instructions to enter additional transaction parameters on a companion device that is different from the electronic device.
28. The method of item 27, further comprising:
   in response to the request to proceed with the transaction, in accordance with a determination that transaction processing criteria have been met, including a criterion that there was no error with the transaction parameters, proceeding with the transaction.
29. The method of any of items 27 - 28, further comprising:
   transmitting, to the companion device, a request regarding a transaction parameter entry user interface; and
   wherein the companion device displays an indication of the request regarding the transaction parameter entry user interface.
30. The method of item 29, wherein activation, on the companion device, of the indication of the request regarding the transaction parameter entry user interface causes display, on a display of the companion device, of the transaction parameter entry user interface.
31. The method of any of items 27 - 30, further comprising:
   receiving a respective additional transaction parameter; and
   in response to receiving the respective additional transaction parameter, updating a transaction user interface in accordance with the respective additional transaction parameter, on the display.
32. The method of item 31, further comprising:
   in response to receiving the transaction parameter, updating the transaction parameters to include the respective additional transaction parameter for use in the transaction.
33. The method of any of items 31 - 32, further comprising:
   in response to receiving the respective additional transaction parameter, displaying, on the display, an indication of the respective additional transaction parameter; and
   while displaying the indication of the respective additional transaction parameter, detecting activation of a hardware button of the electronic device; and
      in accordance with a determination that there is no error with the updated transaction parameters that include the respective additional transaction parameter, proceeding with the transaction for the activity; and
      in accordance with a determination that there is an error with the updated transaction parameters, displaying, on the display, a second error notification indicating that an error has been detected.
34. The method of any of items 31 - 33, further comprising:
   in response to receiving the respective additional transaction parameter, displaying, on the display, instructions to activate a hardware button of the electronic device to authorize payment for the transaction;
   detecting activation of the hardware button; and
   in response to detecting activation of the hardware button:
      in accordance with a determination that transaction processing criteria have been met, including a criterion that there is no error with the updated transaction parameters, proceeding with a transaction for the activity; and
      in accordance with a determination that there is an error with the transaction parameters, displaying, on the display, an error notification indicating that an error has been detected.
35. The method of any of items 27 - 34, further comprising:
   in response to the request to proceed with the transaction, in accordance with the determination that there is an error with the transaction parameters, updating a displayed characteristic of a displayed user interface element to indicate that the error has been detected.
36. The method of any of items 27 - 35, further comprising:
   in response to receiving the request to correct the error:
   in accordance with the determination that potentially compatible transaction parameters are available on the electronic device:
   updating the transaction parameters to include a default transaction parameter of the potentially compatible transaction parameters for use in the transaction; and
   displaying, on the display, one or more affordances corresponding to one or more respective potentially compatible transaction parameters.
37. The method of item 36, further comprising:
   in response to receiving the request to correct the error:
   in accordance with the determination that potentially compatible transaction parameters are available on the electronic device:
   displaying, on the display, an entry affordance, which when activated, enables the user to provide a transaction parameter at the electronic device, that is not included in the potentially compatible transaction parameters.
38. The method of item 37, further comprising:
   detecting activation of the entry affordance;
   in response to detecting activation of entry affordance, monitoring audio input received via a microphone of the electronic device; and
   updating the transaction parameters based on the audio input received via the microphone of the electronic device.
39. The method of any of items 37 - 38, further comprising:
   detecting activation of the entry affordance;
   in response to detecting activation of entry affordance, displaying one or more contacts based on contacts stored in a contacts application;
   receiving selection of a contact of the one or more contacts; and
   updating the transaction parameters based on the selected contact.
40. The method of any of items 37 - 39, further comprising:
   detecting activation of the entry affordance;
   in response to detecting activation of entry affordance, transmitting, to the companion device, a second request regarding a second transaction parameter entry user interface; and
   wherein the companion device displays a second indication of the request regarding the second transaction parameter entry user interface.
41. A computer-readable storage medium storing one or more programs configured to be executed by one or more processors of an electronic device with a display and one or more input devices, the one or more programs including instructions for performing the method of any of items 27 - 40.
42. An electronic device, comprising:
   a display;
   one or more input devices;
   one or more processors; and
   memory storing one or more programs configured to be executed by the one or more processors, the one or more programs including instructions for performing the method of any of items 27 - 40.
43. An electronic device, comprising:
   a display;
   one or more input devices; and
   means for performing the method of any of items 27 - 40.
44. A non-transitory computer-readable storage medium storing one or more programs configured to be executed by one or more processors of an electronic device with a display and one or more input devices, the one or more programs including instructions for:
   receiving a request to proceed with a transaction using transaction parameters;
   in response to the request to proceed with the transaction, in accordance with a determination that there is an error with the transaction parameters, displaying an error notification indicating that an error has been detected;
   receiving, via the one or more input devices, a request to correct the error; and
   in response to receiving the request to correct the error:
      in accordance with a determination that potentially compatible transaction parameters are available on the electronic device, displaying, on the display, one or more of the potentially compatible transaction parameters; and
      in accordance with a determination that potentially compatible transaction parameters are not available on the device, displaying, on the display, instructions to enter additional transaction parameters on a companion device that is different from the electronic device.
45. An electronic device, comprising:
   a display;
   one or more input devices;
   one or more processors; and
   a memory storing one or more programs configured to be executed by the one or more processors, the one or more programs including instructions for:
      receiving a request to proceed with a transaction using transaction parameters;
      in response to the request to proceed with the transaction, in accordance with a determination that there is an error with the transaction parameters, displaying an error notification indicating that an error has been detected;
      receiving, via the one or more input devices, a request to correct the error; and
      in response to receiving the request to correct the error:
         in accordance with a determination that potentially compatible transaction parameters are available on the electronic device, displaying, on the display, one or more of the potentially compatible transaction parameters; and
         in accordance with a determination that potentially compatible transaction parameters are not available on the device, displaying, on the display, instructions to enter additional transaction parameters on a companion device that is different from the electronic device.
46. An electronic device, comprising:
   a display;
   one or more input devices;
   means for receiving a request to proceed with a transaction using transaction parameters;
   means, responsive to the request to proceed with the transaction, in accordance with a determination that there is an error with the transaction parameters, for displaying an error notification indicating that an error has been detected;
   means for receiving, via the one or more input devices, a request to correct the error; and
   means, responsive to receiving the request to correct the error, for:
      in accordance with a determination that potentially compatible transaction parameters are available on the electronic device, displaying, on the display, one or more of the potentially compatible transaction parameters; and
      in accordance with a determination that potentially compatible transaction parameters are not available on the device, displaying, on the display, instructions to enter additional transaction parameters on a companion device that is different from the electronic device.
47. An electronic device, comprising:
   a display unit;
   one or more input device units;
   a hardware button unit; and
   a processing unit coupled to the display unit, the one or more input device units, and the hardware button unit, the processing unit configured to:
      enable display, on the display unit, of an application user interface for a respective application, wherein the application user interface includes a transaction affordance for requesting payment for activity associated with the respective application;
      while enabling display of the application user interface, detect, via the one or more input device units, selection of the transaction affordance; and
      in response to detecting selection of the transaction affordance, enable display, on the display unit, of a transaction user interface that includes concurrently displaying:
         transaction details for the activity associated with the respective application; and
         instructions to activate the hardware button unit of the electronic device to authorize payment for the activity associated with the respective application.
48. The electronic device of item 47, wherein the transaction affordance displayed in the application user interface for the respective application is provided by a payment application of the electronic device that is different from the respective application.
49. The electronic device of any of items 47 - 48, wherein the transaction affordance that, when activated, triggers display of the transaction user interface, is provided by the respective application.
50. The electronic device of any of items 47 - 49, wherein the respective application is a third-party application.
51. The electronic device of any of items 47 - 50, wherein the activity associated with the respective application includes one or more of: a request for transportation, a request for ride sharing, purchasing a service, purchasing a product, and conducting a peer-to-peer transaction.
52. The electronic device of any of items 47 - 51, wherein the transaction details include information about a cost of the activity.
53. The electronic device of any of items 47 - 52, in accordance with a determination that the activity has a variable cost, the transaction details include an indication that the activity has a variable cost.
54. The electronic device of any of items 47 - 53, wherein displaying the transaction user interface further includes displaying a graphical representation of a payment account with which payment will be made if authorization to proceed with the payment transaction is received.
55. The electronic device of any of items 47 - 54, wherein the processing unit is further configured to:
   while displaying the transaction user interface that includes the transaction details and the instructions to activate the hardware button unit, receive input, via the one or more input device units, corresponding to an instruction to scroll the transaction user interface; and
   in response to receiving the input corresponding to the instruction to scroll the transaction user interface:
      enable display, on the display unit, of additional transaction details for the activity associated with the respective application.
56. The electronic device of item 55, wherein:
   the instructions to activate the hardware button unit are displayed at a location on the display unit that is determined based on a location of the hardware button unit;
   displaying additional transaction details for the activity associated with the respective application includes:
      foregoing scrolling the instructions to activate the hardware button unit; and
      scrolling the additional transaction details onto the display unit.
57. The electronic device of item 55, wherein displaying additional transaction details for the activity associated with the respective application includes:
   scrolling the additional transaction details onto the display unit such that the additional transaction details obscure the instructions to activate the hardware button unit.
58. The electronic device of any of items 55 - 57, wherein the processing unit is further configured to:
   while displaying the additional transaction details, detect, via the one or more input device units, selection of a first detail of the additional transaction details; and
   in response to detecting selection of the first detail of the additional transaction details, enable display, on the display unit, of one or more options for the first detail.
59. The electronic device of any of items 47 - 58, wherein the processing unit is further configured to:
   in accordance with the transaction user interface being displayed:
   monitor the hardware button unit for activation;
   detect activation of the hardware button unit; and
   in response to detecting activation of the hardware button unit, in accordance with a determination that the activation of the hardware button unit meets transaction authorization criteria, proceed with a transaction for the activity.
60. The electronic device of any of items 47 - 59, wherein the processing unit is further configured to:
   detect activation of the hardware button unit; and
   in response to detecting activation of the hardware button unit:
      in accordance with a determination that transaction processing criteria have been met, including a criterion that there is no error with the transaction parameters, proceed with a transaction for the activity; and
      in accordance with a determination that there is an error with the transaction parameters, enable display, on the display unit, of an error notification indicating that an error has been detected instead of proceeding with the transaction.
61. The electronic device of item 60, wherein the processing unit is further configured to:
   in accordance with the determination that there is an error with the transaction parameters, receive user input, via the one or more input device units, at the electronic device; and
   in response to receiving the user input at the electronic device, modify the transaction parameters based on the user input.
62. The electronic device of item 60, wherein the processing unit is further configured to:
   in accordance with the determination that there is an error with the transaction parameters, receive a request to correct the error; and
   in response to receiving the request to correct the error:
   in accordance with a determination that potentially compatible transaction parameters are available on the electronic device, enable display, on the display unit, of one or more of the potentially compatible transaction parameters; and
   in accordance with a determination that potentially compatible transaction parameters are not available on the electronic device, enable display, on the display unit, of instructions to enter additional transaction parameters on a companion device that is different from the electronic device.
63. The electronic device of any of items 60 - 62, wherein displaying, on the display unit, the error notification indicating that an error has been detected includes:
   replacing display of the instructions to activate the hardware button unit with display of the error notification.
64. The electronic device of any of items 47 - 63, wherein the processing unit is further configured to:
   receive user input, via the one or more input device units, corresponding to an instruction to select a payment account from among a plurality of payment accounts of an electronic wallet of the electronic device; and
   in response to detecting the user input corresponding to the instruction to select the payment account from among a plurality of payment accounts, select the payment account for use in the transaction for the activity.
65. The electronic device of any of items 47 - 64, wherein displaying the transaction user interface includes replacing a displayed system user interface element with an indication of payment.
66. The electronic device of any of items 60 - 65, wherein:
   proceeding with the transaction for the activity includes:
   requesting a passcode;
   detecting, via the one or more input device units, the passcode; and
   transmitting the passcode for processing the transaction.
67. An electronic device, comprising:
   a display unit;
   one or more input device units; and
   a processing unit coupled to the display unit and the one or more input device units, the processing unit configured to:
      receive a request to proceed with a transaction using transaction parameters;
      in response to the request to proceed with the transaction, in accordance with a determination that there is an error with the transaction parameters, enable display, on the display unit, of an error notification indicating that an error has been detected;
      receive, via the one or more input device units, a request to correct the error; and
      in response to receiving the request to correct the error:
         in accordance with a determination that potentially compatible transaction parameters are available on the electronic device, enable display, on the display unit, of one or more of the potentially compatible transaction parameters; and
         in accordance with a determination that potentially compatible transaction parameters are not available on the electronic device, enable display, on the display unit, of instructions to enter additional transaction parameters on a companion device that is different from the electronic device.
68. The electronic device of item 67, wherein the processing unit is further configured to:
   in response to the request to proceed with the transaction, in accordance with a determination that transaction processing criteria have been met, including a criterion that there was no error with the transaction parameters, proceed with the transaction.
69. The electronic device of any of items 67 - 68, wherein the processing unit is further configured to:
   transmit, to the companion device, a request regarding a transaction parameter entry user interface; and
   wherein the companion device displays an indication of the request regarding the transaction parameter entry user interface.
70. The electronic device of item 69, wherein activation, on the companion device, of the indication of the request regarding the transaction parameter entry user interface causes display, on a display unit of the companion device, of the transaction parameter entry user interface.
71. The electronic device of any of items 67 - 70, wherein the processing unit is further configured to:
   receive a respective additional transaction parameter; and
   in response to receiving the respective additional transaction parameter, update a transaction user interface in accordance with the respective additional transaction parameter, on the display unit.
72. The electronic device of item 71, wherein the processing unit is further configured to:
   in response to receiving the transaction parameter, update the transaction parameters to include the respective additional transaction parameter for use in the transaction.
73. The electronic device of any of items 71 - 72, wherein the processing unit is further configured to:
   in response to receiving the respective additional transaction parameter, enable display, on the display unit, of an indication of the respective additional transaction parameter; and
   while displaying the indication of the respective additional transaction parameter, detect activation of a hardware button unit of the electronic device; and
      in accordance with a determination that there is no error with the updated transaction parameters that include the respective additional transaction parameter, proceed with the transaction for the activity; and
      in accordance with a determination that there is an error with the updated transaction parameters, enable display, on the display unit, of a second error notification indicating that an error has been detected.
74. The electronic device of any of items 71 - 73, wherein the processing unit is further configured to:
   in response to receiving the respective additional transaction parameter, enable display, on the display unit, of instructions to activate a hardware button unit of the electronic device to authorize payment for the transaction;
   detect activation of the hardware button unit; and
   in response to detecting activation of the hardware button unit:
      in accordance with a determination transaction processing criteria have been met, including a criterion that there is no error with the updated transaction parameters, proceed with a transaction for the activity; and
      in accordance with a determination that there is an error with the transaction parameters, enable display, on the display unit, of an error notification indicating that an error has been detected.
75. The electronic device of any of items 67 - 74, wherein the processing unit is further configured to:
   in response to the request to proceed with the transaction, in accordance with the determination that there is an error with the transaction parameters, update a displayed characteristic of a displayed user interface element to indicate that the error has been detected.
76. The electronic device of any of items 67 - 75, wherein the processing unit is further configured to:
   in response to receiving the request to correct the error:
   in accordance with the determination that potentially compatible transaction parameters are available on the electronic device:
   update the transaction parameters to include a default transaction parameter of the potentially compatible transaction parameters for use in the transaction; and
   enable display, on the display unit, of one or more affordances corresponding to one or more respective potentially compatible transaction parameters.
77. The electronic device of item 76, wherein the processing unit is further configured to:
   in response to receiving the request to correct the error:
   in accordance with the determination that potentially compatible transaction parameters are available on the electronic device:
   enable display, on the display unit, of an entry affordance, which when activated, enables the user to provide a transaction parameter at the electronic device, that is not included in the potentially compatible transaction parameters.
78. The electronic device of item 77, wherein the processing unit is further configured to:
   detect activation of the entry affordance;
   in response to detecting activation of entry affordance, monitor audio input received via a microphone unit of the electronic device; and
   update the transaction parameters based on the audio input received via the microphone unit of the electronic device.
79. The electronic device of any of items 77 - 78, wherein the processing unit is further configured to:
   detect activation of the entry affordance;
   in response to detecting activation of entry affordance, enable display, on the display unit, of one or more contacts based on contacts stored in a contacts application;
   receive selection of a contact of the one or more contacts; and
   update the transaction parameters based on the selected contact.
80. The electronic device of any of items 77 - 79, wherein the processing unit is further configured to:
   detect activation of the entry affordance;
   in response to detecting activation of entry affordance, transmit, to the companion device, a second request regarding a second transaction parameter entry user interface; and
   wherein the companion device displays a second indication of the request regarding the second transaction parameter entry user interface.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of invitational content or any other content that may be of interest to them. The present disclosure contemplates that in some instances, this gathered data may include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publically available information.

## Claims

1. A method, comprising:
at a wearable electronic device with a display and one or more input devices of the wearable electronic device:
receiving a request to proceed with a transaction using transaction parameters;
in response to the request to proceed with the transaction, in accordance with a determination that there is an error with the transaction parameters, displaying, on the display of the wearable electronic device, an error notification indicating that an error has been detected;
receiving, via the one or more input devices of the wearable electronic device, a request to correct the error; and
in response to receiving the request to correct the error:
in accordance with a determination that potentially compatible transaction parameters are available on the wearable electronic device, displaying, on the display, one or more of the potentially compatible transaction parameters; and
in accordance with a determination that potentially compatible transaction parameters are not available on the wearable electronic device, displaying, on the display, instructions to enter additional transaction parameters on a companion application on a handheld companion device that is different from the wearable electronic device, wherein:
the handheld companion device includes an input device that is different from the one or more input devices of the wearable electronic device; and
the companion application is configured to send information to the wearable electronic device.

2. The method of claim 1, further comprising:
in response to the request to proceed with the transaction, in accordance with a determination that transaction processing criteria have been met, including a criterion that there was no error with the transaction parameters, proceeding with the transaction.

3. The method of claim 1, further comprising:
transmitting, to the companion device, a request regarding a transaction parameter entry user interface; and
wherein the companion device displays an indication of the request regarding the transaction parameter entry user interface.

4. The method of claim 3, wherein activation, on the companion device, of the indication of the request regarding the transaction parameter entry user interface causes display, on a display of the companion device, of the transaction parameter entry user interface.

5. The method of claim 1, further comprising:
receiving a respective additional transaction parameter; and
in response to receiving the respective additional transaction parameter, updating a transaction user interface in accordance with the respective additional transaction parameter, on the display.

6. The method of claim 5, further comprising:
in response to receiving the transaction parameter, updating the transaction parameters to include the respective additional transaction parameter for use in the transaction.

7. The method of claim 5, further comprising:
in response to receiving the respective additional transaction parameter, displaying, on the display, instructions to activate a hardware button of the electronic device to authorize payment for the transaction;
detecting activation of the hardware button; and
in response to detecting activation of the hardware button:
in accordance with a determination that transaction processing criteria have been met, including a criterion that there is no error with the updated transaction parameters, proceeding with a transaction for the activity; and
in accordance with a determination that there is an error with the transaction parameters, displaying, on the display, an error notification indicating that an error has been detected.

8. The method of claim 1, further comprising:
in response to receiving the request to correct the error:
in accordance with the determination that potentially compatible transaction parameters are available on the electronic device:
updating the transaction parameters to include a default transaction parameter of the potentially compatible transaction parameters for use in the transaction; and
displaying, on the display, one or more affordances corresponding to one or more respective potentially compatible transaction parameters.

9. The method of claim 8, further comprising:
in response to receiving the request to correct the error:
in accordance with the determination that potentially compatible transaction parameters are available on the electronic device:
displaying, on the display, an entry affordance, which when activated, enables the user to provide a transaction parameter at the electronic device, that is not included in the potentially compatible transaction parameters.

10. The method of claim 9, further comprising:
detecting activation of the entry affordance;
in response to detecting activation of entry affordance, monitoring audio input received via a microphone of the electronic device; and
updating the transaction parameters based on the audio input received via the microphone of the electronic device.

11. The method of claim 9, further comprising:
detecting activation of the entry affordance;
in response to detecting activation of entry affordance, transmitting, to the companion device, a second request regarding a second transaction parameter entry user interface; and
wherein the companion device displays a second indication of the request regarding the second transaction parameter entry user interface.

12. The method of claim 1,
wherein receiving the request to correct the error includes detecting activation of the displayed error notification; and
wherein activation of the displayed error notification causes the companion application to be displayed on the handheld companion device.

13. The method of claim 1,
wherein the companion application on the handheld companion device provides a user interface for user entry of a transaction parameter;
wherein the companion application on the handheld companion device receives user entry of the transaction parameter using the input device of the handheld companion device that is different from the one or more input devices of the wearable electronic device; and
wherein the companion application transmits the received user entry of the transaction parameter to the wearable electronic device.

14. A computer-readable storage medium storing one or more programs configured to be executed by one or more processors of a wearable electronic device with a display and one or more input devices of the wearable electronic device, the one or more programs including instructions for performing the method of any of claims 1 - 13.

15. A wearable electronic device, comprising:
a display;
one or more input devices;
one or more processors; and
a memory storing one or more programs configured to be executed by the one or more processors, the one or more programs including instructions for performing the method of any of claims 1-13.
